(19) Europäisches Patentamt
European Patent Office
Office européen des brevets

(11) EP 4 156 735 A1

(12) **EUROPEAN PATENT APPLICATION**
published in accordance with Art. 153(4) EPC

(43) Date of publication:
**29.03.2023 Bulletin 2023/13**

(21) Application number: **21825574.3**

(22) Date of filing: **17.06.2021**

(51) International Patent Classification (IPC):
***H04W 8/02*** *(2009.01)* ***H04W 24/02*** *(2009.01)*
***H04W 28/02*** *(2009.01)*

(52) Cooperative Patent Classification (CPC):
**H04W 8/02; H04W 24/02; H04W 28/02**

(86) International application number:
**PCT/CN2021/100747**

(87) International publication number:
**WO 2021/254461 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.06.2020 CN 202010569778**

(71) Applicant: **Huawei Technologies Co., Ltd.**
**Longgang District,**
**Shenzhen,**
**Guangdong 518129 (CN)**

(72) Inventors:
- **JU, Min**
  **Shenzhen, Guangdong 518129 (CN)**
- **LI, Xianming**
  **Shenzhen, Guangdong 518129 (CN)**

(74) Representative: **Maiwald GmbH**
**Engineering**
**Elisenhof**
**Elisenstrasse 3**
**80335 München (DE)**

# (54) COMMUNICATION METHOD AND APPARATUS, AND SYSTEM

(57) This application discloses a communication method, apparatus, and system. In this application, a first network element obtains first knowledge of a first intent, where the first knowledge of the first intent includes one or more of the following information: a first reliability of fulfilling a first intent target and first information. The first reliability indicates a reliability of fulfilling the first intent target, and the first information indicates impact of a first intent operation on a second intent. The second intent is different from the first intent. The first network element selects a first operation based on the first knowledge of the first intent, where the first operation is for executing the first intent. According to the solutions of this application, the first network element may select the first operation based on the reliability of fulfilling the first intent target and/or the first information, to improve accuracy of selection of the first operation.

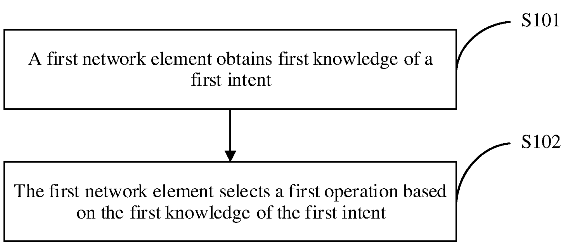


FIG. 7

EP 4 156 735 A1

## Description

This application claims priority to Chinese Patent Application No. 202010569778.X, filed with the China National Intellectual Property Administration on June 20, 2020 and entitled "COMMUNICATION METHOD, APPARATUS, AND SYSTEM", which is incorporated herein by reference in its entirety.

## TECHNICAL FIELD

This application relates to the field of intelligent network management technologies, and in particular, to a communication method, apparatus, and system.

## BACKGROUND

To shield the implementation differences between device vendors, intent driven management (intent driven management, IDM) is launched. A network management system (network management system, NMS) retains only intent (intent) models for transferring intent expressions to an element management system (element management system, EMS). The intent expression describes only what (what) to do and does not involve how (how) to do. Therefore, intent design can be completed with only basic concept knowledge in the wireless field, facilitating operation and maintenance.

After intent translation, the EMS obtains intent operations, intent targets, and execution conditions from an intent knowledge repository. For example, there are three instruction operations that can be performed after an intent is translated, which respectively correspond to three different execution conditions. When an external system implements the intent for a plurality of times, an instruction operation corresponding to a first execution condition cannot fulfill an intent target for a plurality of times. However, when implementing the intent next time, the EMS may necessarily still select the instruction operation corresponding to the first execution condition. As a result, the intent target always fails to meet.

## SUMMARY

This application provides a communication method, apparatus, and system, to improve accuracy of selection of a first operation for executing a first intent.

According to a first aspect, a communication method is provided. The method includes: A first network element obtains first knowledge of a first intent, where the first knowledge of the first intent includes one or more of the following information: a first reliability of fulfilling a first intent target and first information. The first reliability indicates reliability of fulfilling the first intent target, and the first information indicates impact of a first intent operation on a second intent. The second intent is different from the first intent. The first network element selects a first operation based on the first knowledge of the first intent, where the first operation is for executing the first intent.

In this aspect, the first network element may select the first operation based on the reliability of fulfilling the first intent target and/or the first information, to improve accuracy of selection of the first operation.

In a possible implementation, the first information includes an event and an impact value. The event includes a constraint condition or an intent target or an execution condition of the second intent, and the impact value indicates a degree of impact on the event.

In this implementation, the first knowledge is the first information. The first information includes the event and the impact value, and is reflected as a degree of impact of the first operation on the constraint condition, the intent target, or the execution condition of the second intent.

In another possible implementation, that the first network element obtains the first knowledge of the first intent includes: The first network element determines the first knowledge of the first intent; or the first network element receives the first knowledge of the first intent from a second network element, where the second network element is a network management system NMS, a user, an application APP, or operations support system- and business support system-like functionality.

In this implementation, the first network element may internally determine the first knowledge, or may obtain the first knowledge from an external system, for example, the second network element.

In still another possible implementation, that the first network element determines the first knowledge of the first intent includes: The first network element obtains an intent keyword corresponding to an intent expression of the first intent, where the intent keyword includes one or more of the following information: the first intent target, an area on which the first intent is executed, and a name of a network element for executing the first intent. The first network element obtains, from an intent knowledge repository based on the intent keyword, the first knowledge corresponding to the intent keyword.

In this implementation, the first knowledge is stored in the intent knowledge repository. When performing intent translation, the first network element may obtain the corresponding first knowledge from the intent knowledge repository based on the intent keyword obtained during translation.

In still another possible implementation, that the first network element determines the first knowledge of the first intent includes: The first network element obtains intent performance data from a third network element; determines a satisfaction status of a first condition of the first intent based on the intent performance data, where the first condition includes one or more of the following information: the first intent target, a constraint condition of the first intent, and an execution condition of the first intent; and determines the first knowledge of the first intent based on the satisfaction status of the first condition and second knowledge of the first intent, where the second knowledge of the first intent is the first knowledge that is not updated.

In this implementation, the first network element updates the first knowledge based on the satisfaction status of the first condition during intent execution and historical knowledge of the first intent.

In still another possible implementation, the first knowledge is the first reliability. That the first network element determines the first knowledge of the first intent based on the satisfaction status of the first condition and the second knowledge of the first intent includes: If the first intent target is fulfilled, the first network element determines that the first reliability is a sum of a second reliability and a first reliability increment. If the first intent target is unfulfilled, and a difference between a first fulfillment status of the first intent target and a second fulfillment status of the first intent target is a negative value, the first network element determines that the first reliability is a sum of a second reliability and a second reliability increment, where the second reliability increment is less than a first reliability increment. If the first intent target is unfulfilled, and a difference between a first fulfillment status and a second fulfillment status is a positive value, the first network element determines that the first reliability is a difference between a second reliability and a third reliability increment. The second reliability is the first reliability that is not updated. The first fulfillment status is an absolute value of a difference between a fulfillment status of the first intent target in a first time period and the first intent target. The second fulfillment status is an absolute value of a difference between a fulfillment status of the first intent target in a second time period and the first intent target. The second time period is earlier than the first time period.

In this implementation, the first network element updates, based on a current fulfillment status and a historical fulfillment status of the first intent target, the first reliability of fulfilling the first intent target.

In still another possible implementation, the impact value indicates an impact value of the first operation on the constraint condition or the intent target or the execution condition of the second intent.

In still another possible implementation, that the first network element determines the first knowledge of the first intent includes: If the intent target of the second intent changes from being fulfilled to being unfulfilled, the first network element determines that the impact value of the first operation on the second intent is a negative value. If the intent target of the second intent has been fulfilled with a fulfillment status unchanged, the first network element determines that the impact value of the first operation on the second intent is zero.

In this implementation, the impact value of the first operation on the second intent is determined based on the fulfillment status of the intent target of the second intent. In other words, the first knowledge is reflected as impact of the first operation on the intent target of the second intent.

In still another possible implementation, that the first network element determines the first knowledge of the first intent includes: In comparison with a case of not performing the first operation, if the constraint condition of the second intent changes from being satisfied to being unsatisfied when the first operation is performed, the first network element determines that the impact value of the first operation on the second intent is a negative value; in comparison with a case of not performing the first operation, if a case that the constraint condition of the second intent has been satisfied remains unchanged when the first operation is performed, that is, the constraint condition of the second intent is always satisfied, the first network element determines that the impact value of the first operation on the second intent is zero.

In this implementation, the impact value of the first operation on the second intent is determined based on a satisfaction status of the constraint condition of the second intent. In other words, the first knowledge is reflected as impact of the first operation on the constraint condition of the second intent.

In still another possible implementation, that the first network element determines the first knowledge of the first intent includes: In comparison with a case of not performing the first operation, if the execution condition of the second intent changes from being satisfied to being unsatisfied when the first operation is performed, the first network element determines that the impact value of the first operation on the second intent is a negative value; in comparison with a case of not performing the first operation, if a case that the execution condition of the second intent has been satisfied remains unchanged when the first operation is performed, that is, the execution condition of the second intent is always satisfied, the first network element determines that the impact value of the first operation on the second intent is zero.

In this implementation, the impact value of the first operation on the second intent is determined based on a satisfaction status of the execution condition of the second intent. In other words, the first knowledge is reflected as impact of the first operation on the execution condition of the second intent.

In still another possible implementation, that the first network element selects the first operation based on the first knowledge of the first intent includes: The first network element determines the first operation from one or more existing intent operations based on the first fulfillment status of the first intent target, second knowledge corresponding to the one or more existing intent operations, and the first knowledge of the first intent.

In this implementation, if the first intent target corresponding to the first operation can be fulfilled, the first operation may be selected from the one or more existing intent operations.

According to a second aspect, a communication method is provided. The method includes: A second network element obtains a first intent operation from a first network element; determines that the first intent operation has impact on a second intent, where the second intent is different from a first intent; and sends first information to the first network element, where the first information indicates impact of the first intent operation on the second intent, the first information is for selection of a first operation, and the first operation is for executing the first intent.

In this aspect, when obtaining that the first network element performs the first intent operation, and determining that the first intent operation has impact on the second intent, the second network element may indicate, to the first network element, the impact of the first intent operation on the second intent, so that the first network element accurately selects the first operation.

According to a third aspect, a communication apparatus is provided. The apparatus includes a processing unit, configured to obtain first knowledge of a first intent, where the first knowledge of the first intent includes one or more of the following information: a first reliability of fulfilling a first intent target and first information. The first reliability indicates a reliability of fulfilling the first intent target, and the first information indicates impact of a first intent operation on a second intent. The second intent is different from the first intent. The processing unit is further configured to select a first operation based on the first knowledge of the first intent, where the first operation is for executing the first intent.

In a possible implementation, the first information includes an event and an impact value, the event includes a constraint condition or an intent target or an execution condition of the second intent, and the impact value indicates a degree of impact on the event.

In another possible implementation, the processing unit is configured to determine the first knowledge of the first intent. Alternatively, the apparatus further includes a transceiver unit, configured to receive the first knowledge of the first intent from a second network element, where the second network element is a network management system NMS, a user, or an application APP.

In still another possible implementation, the processing unit is configured to obtain an intent keyword corresponding to an intent expression of the first intent, where the intent keyword includes one or more of the following information: the first intent target, an area on which the first intent is executed, and a name of a network element for executing the first intent. The processing unit is further configured to obtain, from an intent knowledge repository based on the intent keyword, the first knowledge corresponding to the intent keyword.

In still another possible implementation, the transceiver unit is further configured to obtain intent performance data from a third network element. The processing unit is further configured to determine a satisfaction status of a first condition of the first intent based on the intent performance data, where the first condition includes one or more of the following information: the first intent target, a constraint condition of the first intent, and an execution condition of the first intent; and determine the first knowledge of the first intent based on the satisfaction status of the first condition and second knowledge of the first intent, where the second knowledge of the first intent is the first knowledge that is not updated.

In still another possible implementation, the first knowledge is the first reliability. The processing unit is further configured to: if the first intent target is fulfilled, determine that the first reliability is a sum of a second reliability and a first reliability increment; if the first intent target is unfulfilled, and a difference between a first fulfillment status of the first intent target and a second fulfillment status of the first intent target is a negative value, determine that the first reliability is a sum of a second reliability and a second reliability increment, where the second reliability increment is less than a first reliability increment; or if the first intent target is unfulfilled, and a difference between a first fulfillment status and a second fulfillment status is a positive value, determine that the first reliability is a difference between a second reliability and a third reliability increment. The second reliability is the first reliability that is not updated. The first fulfillment status is an absolute value of a difference between a fulfillment status of the first intent target in a first time period and the first intent target. The second fulfillment status is an absolute value of a difference between a fulfillment status of the first intent target in a second time period and the first intent target. The second time period is earlier than the first time period.

In still another possible implementation, the impact value indicates an impact value of the first operation on the constraint condition or the intent target or the execution condition of the second intent.

In still another possible implementation, the processing unit is further configured to: if the intent target of the second intent changes from being fulfilled to being unfulfilled, determine that the impact value of the first operation on the second intent is a negative value; or if the intent target of the second intent has been fulfilled with a fulfillment status unchanged, determine that the impact value of the first operation on the second intent is zero.

In still another possible implementation, the processing unit is further configured to: in comparison with a case of not performing the first operation, if the constraint condition of the second intent changes from being satisfied to being unsatisfied when the first operation is performed, determine that the impact value of the first operation on the second intent is a negative value; or in comparison with a case of not performing the first operation, if a case that the constraint condition of the second intent has been satisfied remains unchanged when the first operation is performed, that is, the constraint condition of the second intent is always satisfied, determine that the impact value of the first operation on the second intent is zero.

In still another possible implementation, the processing unit is further configured to: in comparison with a case of not performing the first operation, if the execution condition of the second intent changes from being satisfied to being unsatisfied when the first operation is performed, determine that the impact value of the first operation on the second intent is a negative value; or in comparison with a case of not performing the first operation, if a case that the execution condition of the second intent has been satisfied remains unchanged when the first operation is performed, that is, the execution condition of the second intent is always satisfied, determine that the impact value of the first operation on the second intent is zero.

In still another possible implementation, the processing unit is further configured to determine the first operation from one or more existing intent operations based on the first fulfillment status of the first intent target, second knowledge corresponding to the one or more existing intent operations, and the first knowledge of the first intent.

According to a fourth aspect, a communication apparatus is provided. The apparatus includes: a transceiver unit, configured to obtain a first intent operation from a first network element; and a processing unit, configured to determine that the first intent operation has impact on a second intent, where the second intent is different from a first intent. The transceiver unit is further configured to send first information to the first network element, where the first information indicates impact of the first intent operation on the second intent, the first information is for selection of a first operation, and the first operation is for executing the first intent.

According to a fifth aspect, a communication apparatus is provided. The communication apparatus may be the first network element in any one of the first aspect or the possible implementations of the first aspect, or a block used in the first network element, for example, a chip or a chip system. The communication apparatus includes at least one processor, configured to perform the method in any one of the first aspect or the possible implementations of the first aspect.

For example, the communication apparatus further includes a memory. The memory is coupled to the at least one processor, and the at least one processor is configured to perform the method in any one of the first aspect or the possible implementations of the first aspect.

In a possible implementation, the memory is configured to store program instructions and data. The memory is coupled to the at least one processor, and the at least one processor may invoke and execute the program instructions stored in the memory, to perform the method in any one of the first aspect or the possible implementations of the first aspect.

For example, the communication apparatus further includes a communication interface. The communication interface is used by the communication apparatus to communicate with another device. When the communication apparatus is the first network element, the communication interface is a transceiver, an input/output interface, a circuit, or the like.

In a possible implementation, the communication apparatus includes at least one processor and a communication interface, configured to perform the method in any one of the first aspect or the possible implementations of the first aspect. The communication apparatus specifically includes at least one processor, configured to communicate with an external device through the communication interface. The at least one processor is configured to execute a computer program, to enable the communication apparatus to perform the method in any one of the first aspect or the possible implementations of the first aspect. It may be understood that the external device may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to a sixth aspect, a communication apparatus is provided. The communication apparatus may be the second network element in the second aspect, or a block used in the second network element, for example, a chip or a chip system. The communication apparatus includes at least one processor, configured to perform the method in the second aspect.

For example, the communication apparatus further includes a memory. The memory is coupled to the at least one processor, and the at least one processor is configured to perform the method in the second aspect.

In a possible implementation, the memory is configured to store program instructions and data. The memory is coupled to the at least one processor, and the at least one processor may invoke and execute the program instructions stored in the memory, to perform the method in the second aspect.

For example, the communication apparatus further includes a communication interface. The communication interface is used by the communication apparatus to communicate with another device. When the communication apparatus is the second network element, the communication interface is a transceiver, an input/output interface, a circuit, or the like.

In a possible implementation, the communication apparatus includes at least one processor and a communication interface, configured to perform the method in the second aspect. The communication apparatus specifically includes at least one processor, configured to communicate with an external device through the communication interface. The at least one processor is configured to execute a computer program, to enable the communication apparatus to perform the method in the second aspect. It may be understood that the external device may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to a seventh aspect, a communication system is provided, including the communication apparatus according to any one of the third aspect or the implementations of the third aspect, the communication apparatus according to the fourth aspect, and a third network element.

According to an eighth aspect, a computer-readable storage medium is provided. The computer-readable storage medium stores instructions. When the instructions are executed on a computer, the computer is enabled to perform the method according to any one of the foregoing aspects.

According to a ninth aspect, a computer program product including instructions is provided. When the computer program product runs on a computer, the computer is enabled to perform the method according to any one of the foregoing aspects.

According to a tenth aspect, a chip is provided. The chip is coupled to a memory, and performs the communication method in any one of the first aspect or the implementations of the first aspect of embodiments of this application.

According to an eleventh aspect, a chip is provided. The chip is coupled to a memory, and performs the communication method in any one of the second aspect or the implementations of the second aspect of embodiments of this application.

It should be noted that "coupling" in embodiments of this application indicates a direct combination or an indirect combination of two components.

## BRIEF DESCRIPTION OF DRAWINGS

FIG. 1 is a schematic diagram of an intent-based ENI converged architecture;

FIG. 2 is a schematic diagram of internal and external interfaces of an intent-based ENI converged architecture;

FIG. 3 is a schematic diagram of a structure of an intent-driven management system to which an embodiment of this application is applicable;

FIG. 4 is a schematic diagram of functional blocks involved in intent translation, execution, and maintenance phases;

FIG. 5 is a schematic diagram of an architecture of a communication system to which an embodiment of this application is applicable;

FIG. 6 is a schematic diagram of supporting intent knowledge management by adding four new interfaces to interfaces of an intent-based ENI converged system;

FIG. 7 is a schematic flowchart of a communication method according to an embodiment of this application;

FIG. 8A to FIG. 8C each are a schematic flowchart of a communication method for intent translation according to an embodiment of this application;

FIG. 9A to FIG. 9C each are a schematic flowchart of a communication method for intent execution and maintenance;

FIG. 10A to FIG. 10C each are a schematic flowchart of another communication method for intent execution and maintenance;

FIG. 11A to FIG. 11C each are a schematic flowchart of still another communication method for intent execution and maintenance;

FIG. 12 is a schematic flowchart of still another communication method for intent execution and maintenance;

FIG. 13 is a schematic diagram of a structure of a communication apparatus according to an embodiment of this application;

FIG. 14 is a schematic diagram of a structure of another communication apparatus according to an embodiment of this application; and

FIG. 15 is a schematic diagram of a structure of still another communication apparatus according to an embodiment of this application.

## DESCRIPTION OF EMBODIMENTS

The experiential networked intelligence (Experiential Networked Intelligence, ENI) is a cognitive network management architecture defined by the industry specification group, using artificial intelligence techniques and context-aware policies to optimize and adjust network operations. An ENI system includes 10 functional blocks (functional block, FB), which are classified into four types: input functional blocks, output functional blocks, analysis functional blocks, and decision functional blocks. The block classification and functions are described as follows:

The input functional blocks include a data ingestion (data ingestion) and normalization (normalization) functional block, which is responsible for receiving data from external systems and performs operations such as normalization on the data.

The output functional blocks include an output generation (output generation) and denormalization (denormalization) functional block, which is responsible for transforming system internal commands into formats that can be processed by external systems and sending the commands to the external systems.

The analysis functional blocks include a knowledge management (knowledge management) functional block, a context awareness (context awareness) functional block, and a cognitive management (cognition management) functional block, which are responsible for performing awareness analysis on existing network contexts and predicting a future network status.

The decision functional blocks include a policy management (policy management) functional block, a situational awareness (situational awareness) functional block, and a model-driven engineering (model-driven engineering) functional block, which are responsible for, based on network status awareness, generating new policies based on a policy target, orchestrating the policies, and sending an operation command to an output block.

The ENI defines an intent-based ENI converged architecture and defines functional blocks related to intent translation and intent assurance. FIG. 1 is a schematic diagram of an intent-based ENI converged architecture. Specifically, in the ENI converged architecture, an intent knowledge repository (intent knowledge repository) is added to a knowledge management functional block, an intent policy fulfillment (intent policy fulfillment) functional sub-block is added to a policy management functional block, and an independent intent translation (intent translation) functional block is further introduced.

The intent translation functional block is configured to perform intent translation on a received intent policy.

The intent knowledge repository is configured to store expert experience and network element information. The intent knowledge repository may be used as an independent functional block or placed in the knowledge management functional block in the existing ENI architecture.

The intent policy fulfillment block is configured to implement intent execution and maintenance functions, responsible for orchestrating intent policies, and continuously meet intent requirements of external systems.

In addition to the enhancement of the foregoing three functional blocks, the intent-based ENI converged architecture further defines blocks and interfaces related to intent translation and assurance. FIG. 2 is a schematic diagram of internal and external interfaces of an intent-based ENI converged architecture. To support intent policies, in addition to enhancement of existing ENI interfaces, four new interfaces are added: an interface Eoss-eni-pol that is related to processing policies and that is between an operations support system (operations support system, OSS) and a converged system, an interface Eapp-eni-pol that is related to processing policies and that is between an APP and the converged system, an interface $I_{ITA\text{-}KM\text{-}CMD}$ between an intent translation block and a knowledge management block, and an interface $I_{ITA\text{-}PM\text{-}CMD}$ between an intent translation block and a policy management block.

FIG. 3 is a schematic diagram of a structure of an intent-driven management system to which this application is applicable. The intent-driven management system includes an IDM service consumer (IDM service consumer), an IDM service producer (IDM service producer), and network infrastructure (network infrastructure). The network infrastructure may be physical (physical) or virtual (virtual). The IDM uses service-oriented interfaces to deliver intents. Specifically, the IDM service consumer delivers an intent to the IDM service producer by invoking an intent-driven management service (intent-driven management service, IDMS) interface. The IDM service producer translates the intent into a specific execution policy and delivers the policy to the network infrastructure, and continuously monitors a network status during intent execution to ensure that the intent is fulfilled or maintained.

There are two types of intents delivered by the IDM service consumer: type A (type A) intents and type B (type B) intents.

A type A intent includes operations and notifications and is irrelevant to a specific intent type. For example, the type A intent is a common operation for intent transfer.

A type B intent is an intent model, which is for modeling information that should be included in intent expression. Currently, the given modeling elements should include at least "actions" and "objects".

Specifically, in an intent model, an action includes an action name and a series of properties required for completing the action, and an object includes an object name and a series of properties for identifying a specific object instance. Therefore, a formal expression of the intent model is represented by the following intent expression (for brevity, Driven is omitted below without ambiguity):

<intentExpression> := <IntentDrivenAction><IntentDrivenObject>

<IntentDrivenAction> := <IntentDrivenActionName><IntentDrivenActionProperties>

<IntentDrivenObject> := <IntentDrivenObjectName><IntentDrivenObjectProperties>

For example, an intent expression model in which "a percentage of users with a data rate less than 5 Mbps is less than 1% and an average data rate is not less than 7 Mbps" is shown in the following Table 1:

**Table 1 Intent expression for user rate optimization**

| **IntentDrivenAction** | | **IntentDrivenObject** | |
|---|---|---|---|
| **IDAName** | **IDAProperties** | **IDOName** | **IDOProperties** |
| Optimization | Optimization Type (Data Rate Assurance)<br>[Max Percentage of Low Data Rate UE,<br>Low Data Rate Threshold]<br>Min Average Data Rate | Area | SubNetwork Id<br>AreaInfo |

FIG. 4 is a schematic diagram of functional blocks involved in intent translation and maintenance phases in a case of applying the IDM system shown in FIG. 3 to network equipment management. The intent-based ENI converged system (specifically an EMS in FIG. 4) architecture supports intent translation and assurance. In the field of network equipment management, functional blocks of the ENI may be embedded in the element management system (element management system, EMS). A network management system (network management system, NMS) sends an intent to the EMS. The EMS translates the intent, and sends a finally generated command to an assisted system (assisted system) (which may also be referred to as network equipment (network equipment, NE)). The NE executes the command to fulfill the intent. The NMS may be a user (user), an application (application), or operations support system- and business support system-like functionality (operations support system- and business support system-like functionality, OSS- and BSS-like functionality).

Specifically, in the intent translation phase, after the NMS delivers an intent implementation request to an intent converged system, a knowledge management FB processes the intent implementation request, an intent translation FB queries an intent knowledge repository for intent-related operations (intent operations), an intent fulfillment criterion (intent fulfillment criterion) (also referred to as an intent target), and an execution condition (execution condition); a context awareness FB, a situational awareness FB, and an MDE FB sequentially process the intent; and a policy management FB executes the intent.

In the intent assurance phase, network performance data sequentially passes through the knowledge management FB, a context awareness FB, a situational awareness FB, an MDE FB, and a policy management FB for intent performance data exchange. The intent operations are generated for intent execution based on the intent performance data, an intent fulfillment status, an intent update policy, and the like.

However, after intent translation, the intent operation, the intent target, and the execution condition are obtained from the intent knowledge repository. For example, there are three instruction operations that can be performed after an intent is translated, which respectively correspond to three different execution conditions. When an external system implements the intent for a plurality of times, an instruction operation corresponding to a first execution condition cannot meet the intent fulfillment criterion for a plurality of times. However, when implementing the intent next time, the instruction operation corresponding to the first execution condition is necessarily still selected. As a result, the intent fulfillment criterion always fails to meet.

Embodiments of this application provide a communication method, apparatus, and system. A first network element may select a first operation based on a reliability of fulfilling a first intent target and/or first information, to improve accuracy of selection of the first operation.

FIG. 5 is a schematic diagram of an architecture of a communication system to which an embodiment of this application is applicable. The communication system 100 includes a first network element 200, a second network element 300, and a third network element 400. The second network element 300 transmits a created intent to the first network element 200 for execution. The first network element 200 receives the intent from the second network element 300, translates the intent, obtains an intent operation, an intent target, and an execution condition from an intent knowledge repository, performs operations such as orchestration on the intent to orchestrate the intent into a command executable by the third network element 400, and transmits the command to the third network element 400 for execution. The third network element 400 receives the executable command from the first network element 200, and executes the command. In a network management scenario using the communication system, the first network element may be the EMS shown in FIG. 4. The second network element is an intent creator, and may be the NMS shown in FIG. 4. The third network element is an intent applied entity (infrastructure), and may be the NE shown in FIG. 4.

As described above, the intent-based ENI converged system supports intent translation and assurance. The EMS may perform the foregoing operation process in two phases: an intent translation phase and an intent assurance phase. A data ingestion and normalization FB, a knowledge management FB, an intent translation FB, a context awareness FB, a situational awareness FB, a model-driven engineering FB, a policy management FB, and an output generation and denormalization FB are involved in the intent translation phase. In the intent translation phase, after the NMS delivers an intent implementation request to the EMS, an intent translation block queries the intent knowledge repository (which may be located in the knowledge management functional block) for the intent operation, the intent target, and the execution condition during translation, and the policy management FB executes the intent. In the intent assurance phase, the policy management FB may modify intent operations based on intent performance data, an intent fulfillment status, and an intent policy update status.

To support intent knowledge management, FIG. 6 shows four new interfaces added to the intent-based ENI converged system: an interface $I_{KM\text{-}CM\text{-}CMD}$ between the cognition management FB and the knowledge management FB, an interface $I_{CA\text{-}CM\text{-}CMD}$ between the cognition management FB and the context awareness FB, an interface $I_{PM\text{-}CM\text{-}CMD}$ between the cognition management FB and the policy management FB, and an interface $I_{MDE\text{-}CM\text{-}CMD}$ between the cognition management FB and the model-driven engineering FB.

In this embodiment of this application, in the intent system, the cognition management FB performs analysis and reasoning on knowledge and determines intent knowledge that needs to be updated, and the intent knowledge management FB performs an update operation on the intent knowledge repository.

At least one of the following intent knowledge is added to an intent policy operation in the intent knowledge repository: a first reliability (reliability) of fulfilling a first intent target (indicating a reliability of fulfilling the first intent target) and first information (indicating impact of a first intent operation on a second intent). The first information further includes an event (events) and an impact (impact) value. The event includes a constraint condition or an intent target or an execution condition of the second intent, and the impact value indicates a degree of impact on the event. The intent knowledge can be obtained after intent translation.

During intent assurance, the first reliability and the first information of the intent policy operation are updated based on the intent performance data, the intent fulfillment status, and policies generated by the intent system.

The definitions of reliability, events, and impact are as follows:

**Definition and example of reliability:**

Definition and value: Reliability is for evaluating a status of fulfilling an intent target after an operation is performed for an intent policy. The reliability has an initial value of 100%, with a change range of [0%, 100%].

Calculation method: A fulfillment target for an intent policy p is set to g, and the reliability is r before an operation o is performed. After the operation o is performed, it is monitored that a current intent target is j. The reliability may be updated according to the following method for the case of performing the operation o for the intent policy p:

If the current intent target j has met the fulfillment target g, the reliability increases by r1 on the basis of r. In this case, r is updated to r + r1 (that is, r = r + r1), where a maximum value of r is 100%.

If the current intent target j does not meet the fulfillment target g, but is closer to the fulfillment target g (compared with a previous detection result), the reliability increases by r2 on the basis of r. In this case, r is updated to r + r2 (that is, r = r + r2), where a maximum value of r is 100%.

If the current intent target j does not meet the fulfillment target g, but is further away from the fulfillment target g (compared with a previous detection result), the reliability decreases by r3 from r. In this case, r is updated to r - r3 (that is, r = r - r3), where a minimum value of r is 0%.

r1, r2, and r3 may be user-defined, or set by the ENI system based on experience.

Example: The intent target is to ensure that a cell throughput is 20, the operation is to increase a downlink power, and the reliability is 80% before the operation occurs. After the operation is performed, the reliability (r1 = 10%, r2 = 5%, r3 = 10%) is updated based on the following cases:

1. When the current cell throughput is 20, r = r + r1 = 80% + 10% = 90%.
2. When the current cell throughput is 18 (a previous monitoring result is 15), r = r + r2 = 80% + 5% = 85%.
3. The current cell throughput is 12 (a previous monitoring result is 15), r = r - r3 = 80% - 10% = 70%.

**Definitions and examples of events and impact thereof:**

Definition of events: It is determined based on whether there is any impact on execution and maintenance of different intent policies. Assuming that there is an intent B in a current system, an intent A is added during execution of the intent B, an operation O is performed for the intent A, but the operation O has impact on an intent target of the intent B. In this case, an event is used to indicate impact of the operation O of the intent A on the intent B.

Definition and value of impact: Impact indicates/evaluates a degree of impact of the operation O on the impacted intent B, and specifically indicates an impact value of the operation O on a constraint condition, an intent target or an execution condition of the intent B. The value of impact may be zero or a negative value, which may be specifically [-1, 0].

Calculation method of impact:

In a case, the first network element does not perform the first operation, but the second intent has been executed and an intent target of the second intent has been fulfilled. In this case, after the first network element performs the first operation, if the intent target of the second intent changes from being fulfilled to being unfulfilled, the first network element determines that an impact value of the first operation on the second intent is a negative value; or if the intent target of the second intent has been fulfilled with a fulfillment status unchanged, the first network element determines that the impact value of the first operation on the second intent is zero. The impact value of the first operation on the second intent is determined based on the fulfillment status of the intent target of the second intent. In other words, first knowledge is reflected as impact of the first operation on the intent target of the second intent.

In another case, the first network element does not perform the first operation, but the second intent has been executed and the constraint condition of the second intent has been satisfied. In this case, after the first network element performs the first operation, in comparison with a case of not performing the first operation, if the constraint condition of the second intent changes from being satisfied to being unsatisfied, the first network element determines that the impact value of the first operation on the second intent is a negative value; or in comparison with a case of not performing the first operation, if the case that the constraint condition of the second intent has been satisfied remains unchanged when the first operation is performed, that is, the constraint condition of the second intent is always satisfied, the first network element determines that the impact value of the first operation on the second intent is zero. That is, the impact value of the first operation on the second intent is determined based on the fulfillment status of the constraint condition of the second intent. In other words, first knowledge is reflected as impact of the first operation on the constraint condition of the second intent.

In still another case, the first network element does not perform the first operation, but the second intent has been executed and the execution condition of the second intent has been satisfied. In this case, after the first network element performs the first operation, in comparison with a case of not performing the first operation, if the execution condition of the second intent changes from being satisfied to being unsatisfied, the first network element determines that the impact value of the first operation on the second intent is a negative value; or in comparison with a case of not performing the first operation, if the case that the execution condition of the second intent has been satisfied remains unchanged when the first operation is performed, that is, the execution condition of the second intent is always satisfied, the first network element determines that the impact value of the first operation on the second intent is zero. That is, the impact value of the first operation on the second intent is determined based on the fulfillment status of the execution condition of the second intent. In other words, first knowledge is reflected as impact of the first operation on the execution condition of the second intent.

It may be understood that the impact value of the first operation on the second intent may alternatively be determined based on one or more of the foregoing cases.

For example, the operation O has impact on the intent target of the intent B. An intent target of the intent A is to ensure that a cell throughput is 80, and the intent A increases the downlink power through the operation O. The intent target of the intent B is to ensure that cell energy consumption is less than 100. The operation O of the intent A has impact on the intent B. After the operation O is performed, if current cell energy consumption in the intent B is 120 (a previous monitoring result is 90), the impact value is -1. If the current cell energy consumption in the intent B is 90 (a previous monitoring result is 90), the impact value is 0.

The following describes in detail a communication method provided in this application with reference to FIG. 1 to FIG. 12.

FIG. 7 is a schematic flowchart of a communication method according to an embodiment of this application. The method includes the following steps:

S101: A first network element obtains first knowledge of a first intent.

After receiving the first intent delivered by a second network element, the first network element needs to translate the first intent, obtain the first knowledge of the first intent from an intent knowledge repository, perform operations such as orchestration on the first intent based on the first knowledge, and orchestrate the first intent into a command executable by the third network element. The first knowledge includes a first intent operation (intentOperations) and a first intent fulfillment criterion (intentFulfillmentCriterion) (also referred to as a first intent target). An information structure of the first intent operation is: intentOperations [execution condition (executionCondition), operation type (operationType), operation (operation)]. In this embodiment, the first intent operation may further include a first reliability of fulfilling the first intent target, or the first intent operation may further include first information, or the first intent operation may further include a first reliability of fulfilling the first intent target and first information.

The first reliability indicates a reliability of fulfilling the first intent target, that is, indicates a status of fulfilling the intent target after the intent operation is performed for an intent policy. When the intent is created, the first reliability is initialized to an initial value of 100%. In a subsequent intent assurance process, the first reliability is updated with a range of [0%, 100%]. Specifically, after the intent operation is performed, the first intent target may be fulfilled; or the first intent target is unfulfilled but is closer to being fulfilled, and a reliability increment is added to the original first reliability; or the first intent target is unfulfilled and is further away from being fulfilled, a reliability increment is reduced from the original first reliability.

Performing the first intent operation by the first network element may have impact on a second intent that is being executed in the first network element. The second intent is different from the first intent. The second intent may be any intent that is being executed in the first network element other than the first intent. The first information indicates impact of the first intent operation on the second intent. Specifically, the first information includes an event and an impact value. The event includes a constraint condition or an intent target or an execution condition of the second intent. In other words, the first information indicates an impact value or a degree of impact of the first intent operation on the constraint condition, the intent target, or the execution condition of the second intent. The impact value may be zero or a negative value.

Specifically, in a case, the first network element does not perform the first operation, but the second intent has been executed and an intent target of the second intent has been fulfilled. In this case, after the first network element performs the first operation, if the intent target of the second intent changes from being fulfilled to being unfulfilled, the first network element determines that the impact value of the first operation on the second intent is a negative value; or if the intent target of the second intent has been fulfilled with a fulfillment status unchanged, the first network element determines that the impact value of the first operation on the second intent is zero. In other words, the impact value of the first operation on the second intent is determined based on the fulfillment status of the intent target of the second intent, or the first knowledge is reflected as impact of the first operation on the intent target of the second intent.

In another case, the first network element does not perform the first operation, but the second intent has been executed and the constraint condition of the second intent has been satisfied. In this case, after the first network element performs the first operation, in comparison with a case of not performing the first operation, if the constraint condition of the second intent changes from being satisfied to being unsatisfied, the first network element determines that the impact value of the first operation on the second intent is a negative value; or in comparison with a case of not performing the first operation, if the case that the constraint condition of the second intent has been satisfied remains unchanged when the first operation is performed, that is, the constraint condition of the second intent is always satisfied, the first network element determines that the impact value of the first operation on the second intent is zero. That is, the impact value of the first operation on the second intent is determined based on the fulfillment status of the constraint condition of the second intent. In other words, the first knowledge is reflected as impact of the first operation on the constraint condition of the second intent.

In still another case, the first network element does not perform the first operation, but the second intent has been executed and the execution condition of the second intent has been satisfied. In this case, after the first network element performs the first operation, in comparison with a case of not performing the first operation, if the execution condition of the second intent changes from being satisfied to being unsatisfied, the first network element determines that the impact value of the first operation on the second intent is a negative value; or in comparison with a case of not performing the first operation, if the case that the execution condition of the second intent has been satisfied remains unchanged when the first operation is performed, that is, the execution condition of the second intent is always satisfied, the first network element determines that the impact value of the first operation on the second intent is zero. That is, the impact value of the first operation on the second intent is determined based on the fulfillment status of the execution condition of the second intent. In other words, the first knowledge is reflected as impact of the first operation on the execution condition of the second intent.

Specifically, the first network element obtains the first knowledge of the first intent in the following implementations:

In an implementation, the first network element determines the first knowledge of the first intent.

Specifically, the first knowledge obtained during intent creation or intent translation is stored in the intent knowledge repository of the first network element. The first network element receives an expression of the first intent from the second network element, and performs lexical analysis and syntactic analysis on the expression of the first intent, to obtain an intent keyword corresponding to the expression of the first intent. The intent keyword includes one or more of the following information: the first intent target, an area on which the first intent is executed, and a name of a network element for executing the first intent. The first network element obtains, from the intent knowledge repository based on the obtained intent keyword, the first knowledge corresponding to the intent keyword.

During intent assurance, the first network element obtains intent performance data from the third network element. The first network element determines a satisfaction status of a first condition of the first intent based on the obtained intent performance data. The first condition includes one or more of the following information: the first intent target, a constraint condition of the first intent, and an execution condition of the first intent. The first network element determines the first knowledge of the first intent based on the satisfaction status of the first condition and second knowledge of the first intent, where the second knowledge of the first intent is the first knowledge that is not updated. The first knowledge may be the first reliability. Specifically, if the first intent target is fulfilled, the first network element determines that the first reliability is a sum of a second reliability and a first reliability increment. If the first intent target is unfulfilled, and a difference between a first fulfillment status of the first intent target and a second fulfillment status of the first intent target is a negative value, the first network element determines that the first reliability is a sum of a second reliability and a second reliability increment, where the second reliability increment is less than a first reliability increment. If the first intent target is unfulfilled, and a difference between a first fulfillment status and a second fulfillment status is a positive value, the first network element determines that the first reliability is a difference between a second reliability and a third reliability increment. The second reliability is the first reliability that is not updated. The first fulfillment status is an absolute value of a difference between a fulfillment status of the first intent target in a first time period and the first intent target. The second fulfillment status is an absolute value of a difference between a fulfillment status of the first intent target in a second time period and the first intent target. The second time period is earlier than the first time period. That the first network element determines the first knowledge of the first intent may be understood as that the first network element obtains the first knowledge by updating the second knowledge. The first network element may update the first knowledge to the intent knowledge repository.

In another implementation, the first network element may receive the first knowledge of the first intent from the second network element, to obtain the first knowledge of the first intent. Specifically, the first network element receives the first information from the second network element. The second network element is an NMS, a user, an APP, or operations support system- and business support system-like functionality. The second network element delivers the first intent to the first network element. During executing the first intent or after executing the first intent, the first network element may notify the second network element that an operation corresponding to the first intent is the first intent operation, and accordingly the second network element learns of the first intent operation. Before, when, or after delivering the first intent, the second network element may further deliver the second intent to the first network element. The second intent is different from the first intent. After obtaining the first intent operation corresponding to the first intent, the second network element determines that the first intent operation has impact on the second intent. Specifically, the first intent operation has impact on the constraint condition, the intent target, or the execution condition of the second intent. After determining that the first intent operation has impact on the second intent, the second network element sends the first information to the first network element. The first information indicates impact of the first intent operation on the second intent. The first network element may receive the first information from the second network element. The first information is for selection of the first operation.

S102: The first network element selects the first operation based on the first knowledge of the first intent.

After obtaining the first knowledge of the first intent, where the first knowledge includes the first reliability of fulfilling the first intent target and/or the first information, the first network element may select the first operation based on the first knowledge. The first operation is for executing the first intent.

Specifically, the first network element determines the first operation from one or more existing intent operations based on the first fulfillment status of the first intent target, the second knowledge corresponding to the one or more existing intent operations, and the first knowledge of the first intent. The first operation may be the first intent operation or another operation.

The first network element selects the first operation based on the first knowledge. During selection, a reliability of fulfilling the first intent target and/or impact of the first operation on the second intent are/is incorporated, thereby improving a reliability of fulfilling the first intent target. The selected first operation avoids impact on another intent that is being executed in the first network element, thereby improving a reliability of fulfilling intent targets of a plurality of intents in the first network element.

According to the communication method provided in this embodiment of this application, the first network element may select the first operation based on the reliability of fulfilling the first intent target and/or the first information, to improve accuracy of selection of the first operation.

The following specifically describes a communication method procedure involved in intent translation and intent assurance.

Phase 1: Intent translation phase

FIG. 8A to FIG. 8C each are a schematic flowchart of a communication method for intent translation according to an embodiment of this application. For example, the method may include the following steps:

S201: A second network element sends an intent creation invoking (createintent invoking) request to an ENI system, and specifically, sends the intent creation invoking request to a data ingestion and normalization FB of a first network element.

The second network element herein may also be referred to as an intent creator. The second network element may be an NMS, a user, an APP, or operations support system- and business support system-like functionality. As shown in FIG. 8A to FIG. 8C, generally speaking, the second network element is an external system of the ENI system (the first network element).

The intent creation invoking request includes an intent expression of a first intent. For the intent expression, refer to the foregoing description. The intent creation invoking request requests to create the first intent in the first network element. The request is transferred through a policy/intent interface between the ENI system and the external system.

S202: After receiving the intent creation invoking request, the data ingestion and normalization FB performs a data normalization operation and sends a normalized first intent to a knowledge management FB.

S203: The knowledge management FB stores the normalized first intent and determines a functional entity for sending the intent.

That is, the knowledge management FB determines that the functional entity for sending the intent is any one of the NMS, the user, the APP, and the operations support system- and business support system-like functionality.

S204: The knowledge management FB sends an intent translation request to an intent translation FB.

The intent translation request requests to translate the first intent.

S205: The intent translation FB identifies the intent translation request and allocates an intent identifier (intent ID) to the intent.

The intent identifier identifies the first intent.

S206: The intent translation FB sends response preparation for the intent creation invoking request to a denormalization and output generation FB.

S207: The denormalization and output generation FB sends a response to the intent creation invoking request to the second network element.

The response indicates that the intent creation invoking request is received.

S208: The intent translation FB performs intent parsing on the first intent.

Specifically, the intent parsing includes performing lexical analysis and syntactic analysis on the intent expression of the first intent to obtain an intent keyword corresponding to the intent expression of the first intent, that is, obtain an intent keyword required for querying for an intent knowledge repository and a network knowledge repository. The intent keyword includes one or more of the following information: the first intent target, an area on which the first intent is executed, and a name of a network element for executing the first intent.

S209: If an error exists in parsing the first intent in step S208, the intent translation FB sends preparation for an intent error invoking notification to the denormalization and output generation FB.

S210: The denormalization and output generation FB sends the intent error invoking notification to the second network element.

S211: The intent translation FB updates the error in parsing the first intent to the intent knowledge repository.

S212: If no error exists in parsing the first intent in step S208, the intent translation FB updates the intent keyword and stores the intent keyword into the intent knowledge repository.

S213: The intent translation FB sends, to the knowledge management FB, an intent knowledge query request including the intent keyword in S208, and obtains intent knowledge/network information from an intent knowledge repository sub-FB. The intent knowledge query request requests to obtain the first knowledge of the first intent corresponding to the intent keyword. Further, the intent knowledge query request may further request to obtain the network information corresponding to the intent keyword.

S214: After querying for the first knowledge corresponding to the intent keyword from the intent knowledge repository sub-FB based on the received intent keyword, the knowledge management FB sends a response to the intent knowledge query request to the intent translation FB. The response to the intent knowledge query request includes the intent identifier, the first intent target (intentFulfillmentCriterion), and a first intent operation.

Information in the current first intent operation (intentOperations) includes intentOperations [executionCondition, operation Type, operation]. However, supplement is made to the information included in the first intent operation in this embodiment. Specifically, there are the following several cases for the information included in the first intent operation:

(1) intentOperations [executionCondition, operationType, operation, reliability]. In this case, the first knowledge: reliability is added to the first intent operation. executionCondition indicates an execution condition, operationType indicates an operation type, and operation indicates an intent operation.

(2) intentOperations [executionCondition, operationType, operation, event, impact]. In this case, the first knowledge: event and impact are added to the first intent operation.

(3) intentOperations [executionCondition, operationType, operation, reliability, event, impact]. In this case, reliability, event, and impact are all added to the first intent operation.

The first knowledge that is of the first intent and that is obtained through query based on the intent keyword may be used for selection of an operation in subsequent assurance of the first intent.

S215: The intent translation FB combines the first knowledge through a syntax tree and semantic analysis, and updates combined first knowledge to the intent knowledge repository.

S216: The intent translation FB sends, to a context awareness FB, an intent translation end notification including the Intent ID, intentFulfillmentCriterion, and intentOperations. executionCondition of the first intent includes a key performance indicator (key performance indicator, KPI) for determining a satisfaction status of the execution condition of the first intent in context information.

S217: The context awareness FB adds context information of the first intent, and updates the context information to the knowledge management FB.

The context awareness FB performs intent context awareness on the information included in the intent translation end notification, to obtain the context information of the first intent.

S218: The context awareness FB sends, to a situational awareness FB, an intent context awareness end notification including the Intent ID, intentFulfillmentCriterion, intentOperations, and the added context information. These included messages include the first intent target for measuring a fulfillment status of the first intent target.

S219: The situational awareness FB adds status information of the first intent, and updates the status information to the knowledge management FB.

The situational awareness FB performs intent situational awareness based on the information included in the intent context awareness end notification, to obtain the status information of the first intent.

S220: The situational awareness FB sends, to a model-driven engineering FB, an intent situational awareness end notification including the Intent ID, intentFulfillmentCriterion, intentOperations, the added context information, and the status information of the first intent. The intent situational awareness end notification requests the model-driven engineering FB to generate and execute the first intent corresponding to the Intent ID.

S221: The model-driven engineering FB selects a first operation based on a first reliability and/or the first information.

Specifically, if the first intent operation includes the first reliability, the model-driven engineering FB selects the first operation based on the first reliability.

If the first intent operation includes the first information, the model-driven engineering FB selects the first operation based on the first information.

If the first intent operation includes the first reliability and the first information, the model-driven engineering FB selects the first operation based on the first reliability and the first information.

S222: The model-driven engineering FB transforms an intent operation instruction, and updates the intent operation instruction to the knowledge management FB.

The model-driven engineering FB performs format conversion on the selected first operation, and transforms the first operation into an operation instruction identifiable by the block in the ENI system.

S223: The model-driven engineering FB sends an intent instruction transformation end notification to a policy management FB.

S224: The policy management FB transforms an intent operation instruction type, and updates the intent operation instruction type to the knowledge management FB.

The policy management FB performs format conversion on the first operation, and transforms the first operation into an operation instruction identifiable by the external system.

S225: The policy management FB sends an intent instruction generation request to the denormalization and output generation FB.

S226: The denormalization and output generation FB sends an intent instruction execution request to a third network element.

In this embodiment, after intent translation, both an instruction operation of an intent policy and the first reliability of fulfilling the first intent target and/or the first information are/is included. This provides a basis for operation selection for subsequent intent assurance, and provides initialization parameters for subsequent knowledge update.

Phase 2: Intent assurance process

FIG. 9A to FIG. 9C each are a schematic flowchart of a communication method procedure for intent assurance. In the method, first knowledge includes a first reliability of fulfilling a first intent target. For example, the method may include the following steps:

S301: A context awareness FB sends preparation for an intent performance data subscription request to a denormalization and output generation FB. The preparation for the intent performance data subscription request includes a first intent target, that is, a KPI in executionCondition.

S302: The denormalization and output generation FB sends the intent performance data subscription request to a third network element.

S303: The third network element sends, to an ENI system, an intent performance data subscription response including requested intent performance data.

Specifically, the third network element obtains intent performance data such as a fulfillment status of the first intent target, a satisfaction status of an execution condition of a first intent, and a satisfaction status of a constraint condition of the first intent based on the first intent target, that is, the KPI in executionCondition, included in the intent performance data subscription request. Then, the third network element sends the intent performance data subscription response to a data ingestion and normalization FB. The intent performance data subscription response includes the intent performance data.

S304: The data ingestion and normalization FB sends normalized intent performance data to a knowledge management FB.

S305: The knowledge management FB stores the received intent performance data in a policy knowledge repository.

S306: The knowledge management FB obtains an intent policy from the policy knowledge repository based on the first intent target, and then sends, to the context awareness FB, the intent policy and an intent performance data request that includes intent performance data related to the fulfillment status of the first intent target and the satisfaction status of the execution condition of the first intent.

S307: The context awareness FB updates context information of an intent based on the received intent policy and intent performance data. The context information of the intent includes KPI information in the execution condition of the first intent. The context awareness FB updates the context information of the intent to the knowledge management FB.

S308: The context awareness FB sends an intent context information awareness end notification to a situational awareness FB, where the notification includes the intent policy, the context information of the intent, and the intent performance data related to the fulfillment status of the first intent target.

S309: The situational awareness FB determines, based on the received intent policy and intent performance data, whether the first intent target is fulfilled, estimates the fulfillment status of the first intent target, and updates intent status information. The intent status information includes fulfillment performance and a fulfillment possibility of the first intent target, and the intent status information is updated to the knowledge management FB.

S310: The situational awareness FB sends an intent situational awareness end notification to a model-driven engineering FB, where the notification includes the intent policy, the context information of the intent, and the intent status information.

S311: The model-driven engineering FB determines, based on a reliability in intentOperations of the intent policy, a first operation that needs to be performed.

Specifically, the model-driven engineering FB determines, based on a current possibility of fulfilling the first intent target and a historical first reliability of fulfilling the first intent target, the first operation that needs to be performed. The first operation may be a first intent operation, or may be another intent operation obtained from an intent knowledge repository based on an intent keyword. For example, an intent translation functional block obtains, from the intent knowledge repository, three types of intent operations corresponding to the intent keyword. Each type of intent operation corresponds to a different intent target and execution condition. If a historical first reliability of the first type of intent operation is low, and the model-driven engineering FB estimates, by comparing a received fulfillment status of the first intent target and the first intent target, that the first intent target cannot be fulfilled, the model-driven engineering FB selects another intent operation. If a historical first reliability of the first type of intent operation is high, and the situational awareness FB estimates that the first intent target can be fulfilled, the model-driven engineering FB selects the first intent operation.

S312: The model-driven engineering FB transforms an intent operation instruction, and updates the intent operation instruction to the knowledge management FB.

The model-driven engineering FB performs format conversion on the selected first operation, and transforms the first operation into an operation instruction identifiable by the block in the ENI system.

S313: The model-driven engineering FB sends an intent operation instruction transformation end notification to a policy management FB.

S314: The policy management FB transforms an intent operation instruction type, and updates the intent operation instruction type to the knowledge management FB.

The policy management FB performs format conversion on the first operation, and transforms the first operation into an operation instruction identifiable by the external system.

The following two procedures (procedure 1 and procedure 2) are executed in parallel:

Procedure 1:

S315: The policy management FB sends an intent operation instruction delivery notification to a cognition management FB. The intent operation instruction delivery notification includes a first operation to be performed.

The first operation is the first operation that needs to be performed by the policy management FB in step S314.

S316: The cognition management FB requests, from the situational awareness FB, a status of fulfilling the first intent target before the first operation is performed.

S317: The situational awareness FB sends a response to the cognition management FB, to indicate that the request is received.

For example, in step S309, the situational awareness FB estimates, based on the intent performance data corresponding to the first intent, a possibility of fulfilling the first intent target. Therefore, the situational awareness FB may send the response to the cognition management FB, where the response includes the possibility of fulfilling the first intent target.

S318: The cognition management FB performs analysis, reasoning, and evaluation on the intent policy, to determine an updated first reliability. The first reliability indicates a reliability of fulfilling the first intent target.

After obtaining the possibility of fulfilling the first intent target sent by the situational awareness FB, that is, after performing the first operation once, the cognition management FB may perform analysis, reasoning, and evaluation on the intent policy, to re-obtain the first reliability.

Specifically, a method for updating the reliability is as follows. For example, a fulfillment target of an intent policy p is g, it is monitored that first intent target is j currently, and the reliability before update is r. The reliability may be updated according to the following method:

- If the first intent target j has met the fulfillment target g, the reliability increases by r1 on the basis of r. In this case, r is updated to r + r1 (that is, r = r + r1), where a maximum value of r is 100%.
- If the first intent target j does not meet the fulfillment target g, but is closer to the fulfillment target g (compared with a previous detection result), the reliability increases by r2 on the basis of r. In this case, r is updated to r + r2 (that is, r = r + r2), where a maximum value of r is 100%.
- If the first intent target j does not meet the fulfillment target g, but is further away from the fulfillment target g (compared with a previous detection result), the reliability decreases by r3 from r. In this case, r is updated to r - r3 (that is, r = r - r3), where a minimum value of r is 0%.

S319: The cognition management FB sends, to the knowledge management FB, an intent knowledge update request including the updated reliability.

S320: After receiving the intent knowledge update request, the knowledge management FB updates first knowledge of the first intent in the intent knowledge repository.

S321: The knowledge management FB sends an update response to the cognition management FB.

Procedure 2:

S322: The policy management FB sends an intent instruction execution request to the denormalization and output generation FB.

S323: The denormalization and output generation FB sends the intent instruction execution request to the third network element.

It may be understood that, as shown in FIG. 9Ato FIG. 9C, the procedure 1 and the procedure 2 may be executed in parallel, that is, updating the first reliability and performing the first operation may be performed in parallel. This can improve execution efficiency of the ENI system.

It may be further understood that, as shown in FIG. 9A to FIG. 9C, the procedure 1 and the procedure 2 may be cyclically executed. To be specific, in a process of executing the first intent, the first reliability may be continuously updated based on the intent performance data, or the intent policy corresponding to the first intent may be continuously executed, until the intent policy is disabled or removed.

In this embodiment, the first network element may estimate, based on the intent performance data corresponding to the first intent, the possibility of fulfilling the first intent target, estimate the first reliability of fulfilling the first intent target, and update the estimated first reliability to the intent knowledge repository, so that the first network element can subsequently select the first operation based on the updated first reliability. This improves accuracy of selection of the first operation. In addition, during current operation selection, the first operation may be selected based on the historical first reliability. This improves accuracy of selection of the first operation.

FIG. 10A to FIG. 10C each are a schematic flowchart of another communication method for intent assurance. In the method, first knowledge includes first information. For example, the method may include the following steps:

S401: A context awareness FB sends preparation for an intent performance data subscription request to a denormalization and output generation FB. The preparation for the intent performance data subscription request includes a first intent target, that is, a KPI in executionCondition, and a KPI in thefirst information.

S402: The denormalization and output generation FB sends the intent performance data subscription request to a third network element.

S403: The third network element sends, to an ENI system, an intent performance data subscription response including requested intent performance data.

Specifically, the third network element obtains intent performance data such as a fulfillment status of the first intent target, a satisfaction status of an execution condition of a first intent, and a satisfaction status of a constraint condition of the first intent based on the first intent target, that is, the KPI in execution Condition, included in the intent performance data subscription request. In addition, the intent performance data subscription request further includes events and impact in the first information, to request to obtain intent performance data of a second intent, so that a cognition management FB updates the impact based on the obtained intent performance data of the second intent. Then, the third network element sends an intent performance data subscription response to the data ingestion and normalization FB. The intent performance data subscription response includes the intent performance data.

S404: The data ingestion and normalization FB sends normalized intent performance data to a knowledge management FB.

S405: The knowledge management FB stores the received intent performance data in a policy knowledge repository.

S406: The knowledge management FB obtains an intent policy from the policy knowledge repository based on the first intent target, and then sends the intent policy and an intent performance data request to the context awareness FB, where the intent policy includes the intent policy and the intent performance data request includes intent performance data related to the fulfillment status of the first intent target and the satisfaction status of the execution condition of the first intent, and intent performance data related to the first information.

S407: The context awareness FB updates context information of an intent based on the received intent policy and intent performance data. The context information of the intent includes KPI information in the execution condition of the first intent. The context awareness FB updates the context information of the intent to the knowledge management FB.

S408: The context awareness FB sends an intent context information awareness end notification to a situational awareness FB, where the notification includes the intent policy, the context information of the intent, and the intent performance data related to the fulfillment status of the first intent target.

S409: The situational awareness FB determines, based on the received intent policy and intent performance data, whether the first intent target is fulfilled, estimates the fulfillment status of the first intent target, and updates intent status information. The intent status information includes fulfillment performance and a fulfillment possibility of the first intent target, and the intent status information is updated to the knowledge management FB.

S410: The situational awareness FB sends an intent situational awareness end notification to a model-driven engineering FB, where the notification includes the intent policy, the context information of the intent, and the intent status information.

S411: The model-driven engineering FB determines, based on events and impact in intentOperations of the intent policy, a first operation that needs to be performed.

Specifically, the model-driven engineering FB determines, based on a current possibility of fulfilling the first intent target and historical first event events of and impact on fulfilling the first intent, the first operation that needs to be performed.

The model-driven engineering FB determines, based on the received possibility of fulfilling the first intent target

and an impact value of the first intent operation on the second intent, the first operation that needs to be performed. For example, the first intent operation is performed. If the possibility of fulfilling the first intent target is low, and/or the impact value of the first intent operation on the second intent is a negative value, the model-driven engineering FB selects another intent operation corresponding to an intent keyword as the first operation. In another example, the first intent operation is performed. If the possibility of fulfilling the first intent target is high, and/or the impact value of the first intent operation on the second intent is zero, the model-driven engineering FB selects the first intent operation as the first operation.

S412: The model-driven engineering FB transforms an intent operation instruction, and updates the intent operation instruction to the knowledge management FB.

The model-driven engineering FB performs format conversion on the selected first operation, and transforms the first operation into an operation instruction identifiable by the block in the ENI system.

S413: The model-driven engineering FB sends an intent operation instruction transformation end notification to a policy management FB.

S414: The policy management FB transforms an intent operation instruction type, and updates the intent operation instruction type to the knowledge management FB.

The policy management FB performs format conversion on the first operation, and transforms the first operation into an operation instruction identifiable by the external system.

The following two procedures (procedure 1 and procedure 2) are executed in parallel:

Procedure 1:

S415: The policy management FB sends an intent operation instruction delivery notification to the cognition management FB. The intent operation instruction delivery notification includes a first operation to be performed.

The first operation is the first operation that needs to be performed by the policy management FB in step S414.

S416: The cognition management FB requests, from the context awareness FB, a context status of the second intent before the first operation.

S417: The context awareness FB performs data context awareness analysis on the first information, and sends a response to the cognition management FB, to indicate that the request is received.

The context awareness FB analyzes the impact of the events based on context awareness and sends the impact to the cognition management FB.

The context awareness FB performs context awareness analysis based on context information of the first intent and the second intent, and evaluates impact of the events. Specifically, the context awareness FB evaluates an impact value of performing the first operation on an intent target, a constraint condition, or an execution condition of the second intent, to obtain a context awareness result of the impact. The context awareness FB sends the context awareness result of the impact to the cognition management FB.

S418: The cognition management FB performs analysis, reasoning, and evaluation on an intent policy of the first intent based on the obtained intent performance data, and calculates and updates the impact.

The cognition management FB performs analysis, reasoning, and evaluation on the intent policy of the first intent based on the received intent performance data of the first intent and the second intent and the context awareness result of the impact sent by the context awareness FB, and calculates the impact.

Specifically, in a case, a first network element does not perform the first operation, but the second intent has been executed and the intent target of the second intent has been fulfilled. In this case, after the first network element performs the first operation, if the intent target of the second intent changes from being fulfilled to being unfulfilled, the first network element determines that the impact value of the first operation on the second intent is a negative value; or if the intent target of the second intent has been fulfilled with a fulfillment status unchanged, the first network element determines that the impact value of the first operation on the second intent is zero.

In another case, the first network element does not perform the first operation, but the second intent has been executed and the constraint condition of the second intent has been satisfied. In this case, after the first network element performs the first operation, in comparison with a case of not performing the first operation, if the constraint condition of the second intent changes from being satisfied to being unsatisfied, the first network element determines that the impact value of the first operation on the second intent is a negative value; or in comparison with a case of not performing the first operation, if the case that the constraint condition of the second intent has been satisfied remains unchanged when the first operation is performed, that is, the constraint condition of the second intent is always satisfied, the first network element determines that the impact value of the first operation on the second intent is zero.

In still another case, the first network element does not perform the first operation, but the second intent has been executed and the execution condition of the second intent has been satisfied. In this case, after the first network element performs the first operation, in comparison with a case of not performing the first operation, if the execution condition of the second intent changes from being satisfied to being unsatisfied, the first network element determines that the impact value of the first operation on the second intent is a negative value; or in comparison with a case of not performing the first operation, if the case that the execution condition of the second intent has been satisfied remains unchanged when the first operation is performed, that is, the execution condition of the second intent is always satisfied, the first network element determines that the impact value of the first operation on the second intent is zero.

It may be understood that the impact value of the first operation on the second intent may alternatively be determined based on one or more of the foregoing cases.

For example, an operation O has impact on an intent target of an intent B. An intent target of an intent A is to ensure that a cell throughput is 80, and the intent A increases a downlink power through the operation O. The intent target of the intent B is to ensure that cell energy consumption is less than 100. The operation O of the intent A has impact on the intent B. After the operation O is performed, if current cell energy consumption in the intent B is 120 (a previous monitoring result is 90), the impact value is -1. If the current cell energy consumption in the intent B is 90 (a previous monitoring result is 90), the impact value is 0.

S419: The cognition management FB sends, to the knowledge management FB, an intent knowledge update request including the first information. The first information includes the events and the updated impact.

S420: After receiving the intent knowledge update request, the knowledge management FB updates the first information included in the intent knowledge update request to the intent knowledge repository.

S421: The knowledge management FB sends an update response to the cognition management FB.

Procedure 2:

S422: The policy management FB sends an intent instruction execution request to the denormalization and output generation FB.

S423: The denormalization and output generation FB sends the intent instruction execution request to the third network element.

It may be understood that, as shown in FIG. 10A to FIG. 10C, the procedure 1 and the procedure 2 may be executed in parallel, that is, updating the first information and performing the first operation may be performed in parallel. This can improve execution efficiency of the ENI system.

It may be further understood that, as shown in FIG. 10A to FIG. 10C, the procedure 1 and the procedure 2 may be cyclically executed. To be specific, in a process of executing the first intent, the first information may be continuously updated based on the intent performance data, or the intent policy corresponding to the first intent may be continuously executed, until the intent policy is disabled or removed.

In this embodiment, the first network element may estimate, based on the intent performance data corresponding to the second intent, the impact value of performing the first operation on the second intent, and update the event and the estimated impact value to the intent knowledge repository, so that the first network element can subsequently select the first operation based on the updated event and the impact value. This improves accuracy of selection of the first operation.

FIG. 11A to FIG. 11C each are a schematic flowchart of still another communication method for intent execution and maintenance. In the method, first knowledge includes a first reliability of fulfilling a first intent target and first information. For example, the method may include the following steps:

S501: A context awareness FB sends preparation for an intent performance data subscription request to a denormalization and output generation FB. The preparation for the intent performance data subscription request includes the first intent target, that is, a KPI in executionCondition, and a KPI in the first information.

S502: The denormalization and output generation FB sends an intent performance data subscription request to a third network element.

S503: The third network element sends, to an ENI system, an intent performance data subscription response including requested intent performance data.

Specifically, the third network element obtains intent performance data such as a fulfillment status of the first intent target and a satisfaction status of an execution condition of a first intent based on the first intent target, that is, the KPI in executionCondition, included in the intent performance data subscription request. In addition, the intent performance data subscription request further includes events and impact in the first information, to request to obtain intent performance data of a second intent, so that a cognition management FB updates the impact based on the obtained intent performance data of the second intent. Then, the third network element sends an intent performance data subscription response to the data ingestion and normalization FB. The intent performance data subscription response includes the intent performance data.

S504: The data ingestion and normalization FB sends normalized intent performance data to a knowledge management FB.

S505: The knowledge management FB stores the received intent performance data in a policy knowledge repository.

S506: The knowledge management FB obtains an intent policy from the policy knowledge repository based on the first intent target, and then sends the intent policy and the intent performance data subscription request to the context awareness FB, where the intent policy includes the intent policy and the intent performance data request includes intent performance data related to the fulfillment status of the first intent target and the satisfaction status of the execution condition of the first intent, and intent performance data related to the first information.

S507: The context awareness FB updates context information of an intent based on the received intent policy and intent performance data. The context information of the intent includes KPI information in the execution condition of the first intent. The context awareness FB updates the context information of the intent to the knowledge management FB.

S508: The context awareness FB sends an intent context information awareness end notification to a situational awareness FB, where the notification includes the intent policy, the context information of the intent, and the intent performance data related to the fulfillment status of the first intent target.

S509: The situational awareness FB determines, based on the received intent policy and intent performance data, whether the first intent target is fulfilled, estimates the fulfillment status of the first intent target, and updates intent status information. The intent status information includes fulfillment performance and a fulfillment possibility of the first intent target, and the intent status information is updated to the knowledge management FB.

S510: The situational awareness FB sends an intent situational awareness end notification to a model-driven engineering FB, where the notification includes the intent policy, the context information of the intent, and the intent status information.

S511: The model-driven engineering FB determines, based on reliability, events, and impact in intentOperations of the intent policy, a first operation that needs to be performed.

Specifically, the model-driven engineering FB determines, based on a current possibility of fulfilling the first intent target, a historical first reliability of fulfilling the first intent target, and historical first events events of and impact on fulfilling the first intent, the first operation that needs to be performed.

The model-driven engineering FB determines, based on the received possibility of fulfilling the first intent target, the historical first reliability of fulfilling the first intent target, and an impact value of the first intent operation on the second intent, the first operation that needs to be performed. For example, the first intent operation is performed. If a historical first reliability of the first intent operation is low, the possibility of fulfilling the first intent target is low, and/or the impact value of the first intent operation on the second intent is a negative value, the model-driven engineering FB selects another intent operation corresponding to an intent keyword as the first operation. In another example, the first intent operation is performed. If a historical first reliability of the first intent operation is high, the possibility of fulfilling the first intent target is high, and/or the impact value of the first intent operation on the second intent is zero, the model-driven engineering FB selects the first intent operation as the first operation.

S512: The model-driven engineering FB transforms an intent operation instruction, and updates the intent operation instruction to the knowledge management FB.

The model-driven engineering FB performs format conversion on the selected first operation, and transforms the first operation into an operation instruction identifiable by the block in the ENI system.

S513: The model-driven engineering FB sends an intent operation instruction transformation end notification to a policy management FB.

S514: The policy management FB transforms an intent operation instruction type, and updates the intent operation instruction type to the knowledge management FB.

The policy management FB performs format conversion on the first operation, and transforms the first operation into an operation instruction identifiable by the external system.

The following two procedures (procedure 1 and procedure 2) are executed in parallel:

Procedure 1:

S515: The policy management FB sends an intent operation instruction delivery notification to the cognition management FB. The intent operation instruction delivery notification includes a first operation to be performed.

The first operation is the first operation that needs to be performed by the policy management FB in step S514.

S516: The cognition management FB requests, from the context awareness FB, a context status of the second intent before the first operation.

S517: The context awareness FB performs data context awareness analysis on the first information, and sends a response to the cognition management FB, to indicate that the request is received.

The context awareness FB analyzes the impact of the events based on context awareness and sends the impact to the cognition management FB.

The context awareness FB performs context awareness analysis based on context information of the first intent and the second intent, and evaluates impact of the events. Specifically, the context awareness FB evaluates an impact value of performing the first operation on an intent target, a constraint condition, or an execution condition of the second intent, to obtain a context awareness result of the impact. The context awareness FB sends the context awareness result of the impact to the cognition management FB.

S518: The cognition management FB requests, from the situational awareness FB, a status of fulfilling the first intent target before the first operation is performed.

S519: The situational awareness FB sends a response to the cognition management FB, to indicate that the request is received.

For example, in step S509, the situational awareness FB estimates, based on the intent performance data corresponding to the first intent, a possibility of fulfilling the first intent target. Therefore, the situational awareness FB may send the response to the cognition management FB, where the response includes the possibility of fulfilling the first intent target.

S520: The cognition management FB performs analysis, reasoning, and evaluation on an intent policy of the first intent based on the obtained intent performance data, calculates and updates the impact, and performs analysis, reasoning, and evaluation on the intent policy to determine an updated first reliability. The first reliability indicates a reliability of fulfilling the first intent target.

For determining the updated first reliability by the cognition management FB, refer to step S318 in the embodiment shown in FIG. 9C. For determining updated impact by the cognition management FB, refer to step S418 in the embodiment shown in FIG. 10C.

S521: The cognition management FB sends an intent knowledge update request to the knowledge management FB, where the intent knowledge update request includes updated first knowledge. The updated first knowledge includes the updated first reliability and first information. The first information includes the events and the updated impact.

S522: After receiving the intent knowledge update request, the knowledge management FB updates the first knowledge included in the intent knowledge update request to an intent knowledge repository.

S523: The knowledge management FB sends an update response to the cognition management FB.

Procedure 2:

S524: The policy management FB sends an intent instruction execution request to the denormalization and output generation FB.

S525: The denormalization and output generation FB sends the intent instruction execution request to the third network element.

It may be understood that, as shown in FIG. 11A to FIG. 11C, the procedure 1 and the procedure 2 may be executed in parallel, that is, updating the first knowledge and performing the first operation may be performed in parallel. This can improve execution efficiency of the ENI system.

It may be further understood that, as shown in FIG. 11A to FIG. 11C, the procedure 1 and the procedure 2 may be cyclically executed. To be specific, in a process of executing the first intent, the first knowledge may be continuously updated based on the intent performance data, or the intent policy corresponding to the first intent may be continuously executed, until the intent policy is disabled or removed.

In this embodiment, the first network element may recalculate the first knowledge based on the intent performance data corresponding to the second intent, and update the recalculated first knowledge to the intent knowledge repository, so that the first network element can subsequently select the first operation based on the updated first knowledge. This improves accuracy of selection of the first operation.

FIG. 12 is a schematic flowchart of still another communication method according to an embodiment of this application. For example, the method includes the following steps:

S601: A second network element obtains a first intent operation from a first network element.

The second network element delivers a first intent to the first network element. The first network element performs intent orchestration, obtains first knowledge of the first intent from an intent knowledge repository, and selects a first operation based on the first knowledge. The first operation is for executing the first intent. In this embodiment, the first operation is the first intent operation.

The second network element may be a user, an APP, or OSS-like functionality.

During or after executing the first intent, the first network element may notify the second network element that an operation corresponding to the first intent is the first intent operation, and accordingly the second network element learns of the first intent operation.

Specifically, the second network element obtains the first intent operation from a policy management FB of the first network element.

S602: The second network element determines that the first intent operation has impact on a second intent.

Before, when, or after delivering the first intent, the second network element may further deliver the second intent to the first network element. The second intent is different from the first intent. After obtaining the first intent operation corresponding to the first intent, the second network element determines that the first intent operation has impact on the second intent. Specifically, the first intent operation has impact on a constraint condition, an intent target, or an execution condition of the second intent.

S603: The second network element sends an intent knowledge update request to a data ingestion and normalization FB of the first network element.

After determining that the first intent operation has impact on the second intent, the second network element needs to update the first knowledge of the first intent in the first network element. Specifically, first information of the first intent is updated. The first information specifically refers to an event, and may not include an impact value. The update request does not include a first reliability either. The impact value and the first reliability are evaluation-type indicators, and therefore need to be evaluated and updated in a running process of an ENI system, but do not need to be updated by an external system (that is, the second network element).

The first information may be included in the intent knowledge update request. The intent knowledge update request requests to update the first knowledge of the first intent. The first information indicates impact of the first intent operation on the second intent. Specifically, the first information indicates impact of the first intent operation on the constraint condition, the intent target, or the execution condition of the second intent. The first information is for selection of the first operation. The first operation is for executing the first intent.

S604: The data ingestion and normalization FB forwards the intent knowledge update request to a cognition management FB.

S605: The cognition management FB analyzes the first information, and determines whether to update the first information to the intent knowledge repository.

After receiving the intent knowledge update request, the cognition management FB obtains the first information included in the intent knowledge update request, analyzes the first information, and determines whether to update the first information to the intent knowledge repository. Specifically, for example, the cognition management FB determines whether the first intent operation actually has impact on the constraint condition, the intent target, or the execution condition of the second intent. If a result of the determining is yes, the cognition management FB determines that the first information needs to be updated to the intent knowledge repository; otherwise, determines that the first information does not need to be updated to the intent knowledge repository.

S606: If determining that the update is required in S605, the cognition management FB sends the intent knowledge update request to a knowledge management FB, where the intent knowledge update request includes the first information.

The intent knowledge update request requests to update the first information to the intent knowledge repository. The intent knowledge repository is set in the knowledge management FB. Therefore, the cognition management FB sends the intent knowledge update request to the knowledge management FB, where the intent knowledge update request includes the first information.

S607: The knowledge management FB updates the first information to the intent knowledge repository.

S608. The knowledge management FB sends an intent knowledge update response to the cognition management FB, where the intent knowledge update response indicates whether the update succeeds.

S609: The cognition management FB sends the intent knowledge update response to the data ingestion and normalization FB.

S610: The data ingestion and normalization FB forwards the intent knowledge update response to the second network element.

Specifically, if determining that the update is required in S605, the cognition management FB sends the intent knowledge update response to the second network element based on the intent knowledge update response. If determining that the update is not required in S605, the cognition management FB sends the intent knowledge update response to the external system, where the intent knowledge update response indicates that the update is not required.

After updating the first information to the intent knowledge repository, when executing the first intent next time, the first network element obtains the first knowledge from the intent knowledge repository based on an intent keyword, where the first knowledge includes the first information. In this case, the first network element may select the first operation based on the first knowledge. For example, assuming that impact of the first intent operation on the second intent is negative, the first network element avoids selecting the first intent operation. Assuming that impact of the first intent operation on the second intent is zero, the first network element may select the first intent operation as the first operation.

According to the communication method provided in this embodiment of this application, when the second network element obtains that the first network element performs the first intent operation and determines that the first intent operation has impact on the second intent, the second network element may indicate, to the first network element, the impact of the first intent operation on the second intent, so that the first network element accurately selects the first operation.

It may be understood that in the foregoing embodiments, methods and/or steps implemented by the first network element may also be implemented by a component (for example, a chip or a circuit) that can be used in the first network element, and methods and/or steps implemented by the second network element may also be implemented by a component (for example, a chip or a circuit) that can be used in the second network element.

The foregoing mainly describes the solutions provided in embodiments of this application from the perspective of interaction between network elements. Correspondingly, an embodiment of this application further provides a communication apparatus, and the communication apparatus is configured to implement the foregoing methods. The communication apparatus may be the first network element in the foregoing method embodiments, an apparatus including the first network element, or a component that can be used in the first network element. Alternatively, the communication apparatus may be the second network element in the foregoing method embodiments, an apparatus including the second network element, or a component that may be used in the second network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, or may be other division during actual implementation.

Based on a same concept as the foregoing communication method, as shown in FIG. 13, an embodiment of this application further provides a communication apparatus. The communication apparatus 500 includes a processing unit 51 and may further include a transceiver unit 52.

The processing unit 51 is configured to obtain first knowledge of a first intent, where the first knowledge of the first intent includes one or more of the following information: a first reliability of fulfilling a first intent target and first information, the first reliability indicates a reliability of fulfilling the first intent target, the first information indicates impact of a first intent operation on a second intent, and the second intent is different from the first intent.

The processing unit 51 is further configured to select a first operation based on the first knowledge of the first intent, where the first operation is for executing the first intent.

It can be learned from the foregoing that the first network element may select the first operation based on the reliability of fulfilling the first intent target and/or the first information, to improve accuracy of selection of the first operation.

In a possible implementation, the first information includes an event and an impact value, the event includes a constraint condition or an intent target or an execution condition of the second intent, and the impact value indicates a degree of impact on the event. In this implementation, the first knowledge is the first information. The first information includes the event and the impact value, and is reflected as the degree of impact of the first operation on the constraint condition, the intent target, or the execution condition of the second intent.

In another possible implementation, the processing unit 51 is configured to determine the first knowledge of the first intent.

Alternatively, the transceiver unit 52 is configured to receive the first knowledge of the first intent from a second network element, where the second network element is a network management system NMS, a user, an application APP, or operations support system- and business support system-like functionality. In this implementation, the first network element may internally determine the first knowledge, or may obtain the first knowledge from an external system, for example, the second network element.

In still another possible implementation, the processing unit 51 is configured to obtain an intent keyword corresponding to an intent expression of the first intent, where the intent keyword includes one or more of the following information: the first intent target, an area on which the first intent is executed, and a name of a network element for executing the first intent.

The processing unit 51 is further configured to obtain, from an intent knowledge repository based on the intent keyword, the first knowledge corresponding to the intent keyword.

In this implementation, the first knowledge is stored in the intent knowledge repository. When performing intent translation, the first network element may obtain the corresponding first knowledge from the intent knowledge repository based on the intent keyword obtained during translation.

In still another possible implementation, the transceiver unit 52 is further configured to obtain intent performance data from a third network element.

The processing unit 51 is further configured to determine a satisfaction status of a first condition of the first intent based on the intent performance data, where the first condition includes one or more of the following information: the first intent target, a constraint condition of the first intent, and an execution condition of the first intent.

The processing unit 51 is further configured to determine the first knowledge of the first intent based on the satisfaction status of the first condition and second knowledge of the first intent, where the second knowledge of the first intent is the first knowledge that is not updated.

In this implementation, the first network element updates the first knowledge based on the satisfaction status of the first condition during intent execution and historical knowledge of the first intent.

In still another possible implementation, the first knowledge is the first reliability.

The processing unit 51 is further configured to: if the first intent target is fulfilled, determine that the first reliability is a sum of a second reliability and a first reliability increment.

Alternatively, the processing unit 51 is further configured to: if the first intent target is unfulfilled, and a difference between a first fulfillment status of the first intent target and a second fulfillment status of the first intent target is a negative value, determine that the first reliability is a sum of a second reliability and a second reliability increment, where the second reliability increment is less than a first reliability increment.

The processing unit 51 is further configured to: if the first intent target is unfulfilled, and a difference between a first fulfillment status and a second fulfillment status is a positive value, determine that the first reliability is a difference between a second reliability and a third reliability increment.

The second reliability is the first reliability that is not updated. The first fulfillment status is an absolute value of a difference between a fulfillment status of the first intent target in a first time period and the first intent target. The second fulfillment status is an absolute value of a difference between a fulfillment status of the first intent target in a second time period and the first intent target. The second time period is earlier than the first time period.

In this implementation, the first network element updates, based on a current fulfillment status and a historical fulfillment status of the first intent target, the first reliability of fulfilling the first intent target.

In still another possible implementation, the impact value indicates an impact value of the first operation on the constraint condition or the intent target or the execution condition of the second intent.

In still another possible implementation, the processing unit 51 is further configured to: if the intent target of the second intent changes from being fulfilled to being unfulfilled, determine that the impact value of the first operation on the second intent is a negative value.

Alternatively, the processing unit 51 is further configured to: if the intent target of the second intent has been fulfilled with a fulfillment status unchanged, determine that the impact value of the first operation on the second intent is zero.

In this implementation, the impact value of the first operation on the second intent is determined based on the fulfillment status of the intent target of the second intent. In other words, the first knowledge is reflected as impact of the first operation on the intent target of the second intent.

In still another possible implementation, the processing unit 51 is further configured to: in comparison with a case of not performing the first operation, if the constraint condition of the second intent changes from being satisfied to being unsatisfied when the first operation is performed, determine that the impact value of the first operation on the second intent is a negative value.

Alternatively, the processing unit 51 is further configured to: in comparison with a case of not performing the first operation, if a case that the constraint condition of the second intent has been satisfied remains unchanged when the first operation is performed, that is, the constraint condition of the second intent is always satisfied, determine that the impact value of the first operation on the second intent is zero.

In this implementation, the impact value of the first operation on the second intent is determined based on a satisfaction status of the constraint condition of the second intent. In other words, the first knowledge is reflected as impact of the first operation on the constraint condition of the second intent.

In still another possible implementation, the processing unit 51 is further configured to: in comparison with a case of not performing the first operation, if the execution condition of the second intent changes from being satisfied to being unsatisfied when the first operation is performed, determine that the impact value of the first operation on the second intent is a negative value.

Alternatively, the processing unit 51 is further configured to: in comparison with a case of not performing the first operation, if a case that the execution condition of the second intent has been satisfied remains unchanged when the first operation is performed, that is, the execution condition of the second intent is always satisfied, determine that the impact value of the first operation on the second intent is zero.

In this implementation, the impact value of the first operation on the second intent is determined based on a satisfaction status of the execution condition of the second intent. In other words, the first knowledge is reflected as impact of the first operation on the execution condition of the second intent.

In still another possible implementation, the processing unit 51 is further configured to determine the first operation from one or more existing intent operations based on the first fulfillment status of the first intent target, second knowledge corresponding to the one or more existing intent operations, and the first knowledge of the first intent.

In this implementation, if the first intent target corresponding to the first operation can be fulfilled, the first operation may be selected from the one or more existing intent operations.

For specific implementation of the processing unit 51 and the transceiver unit 52, refer to corresponding descriptions of the first network element in the communication methods shown in FIG. 7 to FIG. 12. Details are not described herein again.

According to the communication apparatus provided in this embodiment of this application, the communication apparatus may select the first operation based on the reliability of fulfilling the first intent target and/or the first information, to improve accuracy of selection of the first operation.

Based on a same concept as the foregoing communication method, as shown in FIG. 14, an embodiment of this application further provides a communication apparatus. The communication apparatus 600 includes a transceiver unit 61 and a processing unit 62.

The transceiver unit 61 is configured to obtain a first intent operation from a first network element.

The processing unit 62 is configured to determine that the first intent operation has impact on a second intent, where the second intent is different from a first intent.

The transceiver unit 61 is further configured to send first information to the first network element, where the first information indicates impact of the first intent operation on the second intent, the first information is for selection of a first operation, and the first operation is for executing the first intent.

For specific implementation of the transceiver unit 61 and the processing unit 62, refer to descriptions of the second network element in the communication methods shown in FIG. 7 to FIG. 12.

According to the communication apparatus provided in this embodiment of this application, when the communication apparatus obtains that the first network element performs the first intent operation and determines that the first intent operation has impact on the second intent, the communication apparatus may indicate, to the first network element, the impact of the first intent operation on the second intent, so that the first network element accurately selects the first operation.

As shown in FIG. 15, a schematic diagram of a structure of hardware of a communication apparatus is further provided. The communication apparatus is configured to perform the communication method. Some or all of the foregoing methods may be implemented using hardware, or may be implemented using software or firmware.

Optionally, in specific implementation, the communication apparatus may be a chip or an integrated circuit.

Optionally, when some or all of the communication methods in the foregoing embodiments are implemented using software or firmware, the communication methods may be implemented by using a communication apparatus 700 provided in FIG. 15. As shown in FIG. 15, the communication apparatus 700 may include:

a memory 33 and a processor 34 (there may be one or more processors 34 in the apparatus, and one processor is used as an example in FIG. 15), and may further include an input apparatus 31 and an output apparatus 32. In this embodiment, the input apparatus 31, the output apparatus 32, the memory 33, and the processor 34 may be connected through a bus or in another manner. For example, they are connected through a bus in FIG. 15.

In an embodiment, the processor 34 is configured to perform the method steps performed by the first network element in FIG. 7 to FIG. 12.

In another embodiment, the processor 34 is configured to perform the method steps performed by the second network element in FIG. 7 to FIG. 12.

Optionally, a program of the communication method may be stored in the memory 33. The memory 33 may be a physically independent unit, or may be integrated with the processor 34. The memory 33 may alternatively be configured to store data.

Optionally, when some or all of the communication methods in the foregoing embodiments are implemented using software, the communication apparatus may alternatively include only a processor. A memory configured to store a program is located outside the communication apparatus. The processor is connected to the memory via a circuit/wire, and is configured to read and execute the program stored in the memory.

The processor may be a central processing unit (central processing unit, CPU), a network processor (network processor, NP), or a WLAN device.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The memory may include a volatile memory (volatile memory), for example, a random-access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD).

The memory may alternatively include a combination of the foregoing types of memories.

A person skilled in the art should understand that one or more embodiments of this disclosure may be provided as a method, a system, or a computer program product. Therefore, the one or more embodiments of this disclosure may use a form of a hardware-only embodiment, a software-only embodiment, or an embodiment with a combination of software and hardware. Moreover, the one or more embodiments of this disclosure may use a form of a computer program product that is implemented on one or more computer-usable storage media (including but not limited to a disk memory, a CD-ROM, an optical memory, and the like) that include computer usable program code.

An embodiment of this application further provides a chip system, including at least one processor and an interface. The at least one processor is coupled to a memory through the interface. When the at least one processor executes a computer program or instructions in the memory, the method in any one of the foregoing method embodiments is performed. Optionally, the chip system may include a chip, or may include a chip and another discrete component. This is not specifically limited in this embodiment of this application.

An embodiment of this application further provides a computer-readable storage medium that stores a computer program. When the program is executed by a processor, the steps of the communication method described in any embodiment of this disclosure are implemented.

An embodiment of this application further provides a computer program product including instructions. When the computer program product runs on a computer, the computer is enabled to perform the steps of the communication method described in any embodiment of this disclosure.

An embodiment of this application further provides a communication system. The communication system includes the communication apparatus.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that unless otherwise specified, "/" in descriptions of this application represents an "or" relationship between associated objects. For example, A/B may represent A or B. A and B may be singular or plural. In addition, in descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In several embodiments provided in this application, it should be understood that the disclosed system, apparatus, and method may be implemented in another manner. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented using software, hardware, firmware, or any combination thereof. When software is used to implement the embodiments, all or some of the embodiments may be implemented in a form of a computer program product. The computer program product includes one or more computer instructions. When the one or more computer program instructions are loaded and executed on a computer, the procedures or functions according to embodiments of this application are all or partially generated. The computer may be a general-purpose computer, a dedicated computer, a computer network, or other programmable apparatuses. The one or more computer instructions may be stored in a computer-readable storage medium, or transmitted by using the computer-readable storage medium. The one or more computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

## Claims

1. A communication method, wherein the method comprises:

    obtaining, by a first network element, first knowledge of a first intent, wherein the first knowledge of the first intent comprises one or more of the following information: a first reliability of fulfilling a first intent target and first information, the first reliability indicates a reliability of fulfilling the first intent target, the first information indicates impact of a first intent operation on a second intent, and the second intent is different from the first intent; and
    selecting, by the first network element, a first operation based on the first knowledge of the first intent, wherein the first operation is for executing the first intent.

2. The method according to claim 1, wherein the first information comprises an event and an impact value, the event comprises a constraint condition or an intent target or an execution condition of the second intent, and the impact value indicates a degree of impact on the event.

3. The method according to claim 1 or 2, wherein the obtaining, by a first network element, first knowledge of a first intent comprises:

    determining, by the first network element, the first knowledge of the first intent; or
    receiving, by the first network element, the first knowledge of the first intent from a second network element, wherein the second network element is a network management system NMS, a user, or an application APP.

4. The method according to claim 3, wherein the determining, by the first network element, the first knowledge of the first intent comprises:

    obtaining, by the first network element, an intent keyword corresponding to an intent expression of the first intent, wherein the intent keyword comprises one or more of the following information: the first intent target, an area on which the first intent is executed, and a name of a network element for executing the first intent; and
    obtaining, by the first network element from an intent knowledge repository based on the intent keyword, the first knowledge corresponding to the intent keyword.

5. The method according to claim 3 or 4, wherein the determining, by the first network element, the first knowledge of the first intent comprises:

    obtaining, by the first network element, intent performance data from a third network element;
    determining, by the first network element, a satisfaction status of a first condition of the first intent based on the intent performance data, wherein the first condition comprises one or more of the following information: the first intent target, a constraint condition of the first intent, and an execution condition of the first intent; and
    determining, by the first network element, the first knowledge of the first intent based on the satisfaction status of the first condition and second knowledge of the first intent, wherein the second knowledge of the first intent is the first knowledge that is not updated.

6. The method according to claim 5, wherein the first knowledge is the first reliability, and the determining, by the first network element, the first knowledge of the first intent based on the satisfaction status of the first condition and second knowledge of the first intent comprises:

    if the first intent target is fulfilled, determining that the first reliability is a sum of a second reliability and a first reliability increment;
    if the first intent target is unfulfilled, and a difference between a first fulfillment status of the first intent target and a second fulfillment status of the first intent target is a negative value, determining that the first reliability is a sum of a second reliability and a second reliability increment, wherein the second reliability increment is less than a first reliability increment; or

if the first intent target is unfulfilled, and a difference between a first fulfillment status and a second fulfillment status is a positive value, determining that the first reliability is a difference between a second reliability and a third reliability increment, wherein

the second reliability is the first reliability that is not updated, the first fulfillment status is an absolute value of a difference between a fulfillment status of the first intent target in a first time period and the first intent target, the second fulfillment status is an absolute value of a difference between a fulfillment status of the first intent target in a second time period and the first intent target, and the second time period is earlier than the first time period.

**7.** The method according to any one of claims 3 to 6, wherein the impact value indicates an impact value of the first operation on the constraint condition or the intent target or the execution condition of the second intent.

**8.** The method according to claim 7, wherein the determining, by the first network element, the first knowledge of the first intent comprises:

if the intent target of the second intent changes from being fulfilled to being unfulfilled, determining that the impact value of the first operation on the second intent is a negative value; or

if the intent target of the second intent has been fulfilled with a fulfillment status unchanged, determining that the impact value of the first operation on the second intent is zero.

**9.** The method according to claim 7 or 8, wherein the determining, by the first network element, the first knowledge of the first intent comprises:

in comparison with a case of not performing the first operation, if the constraint condition of the second intent changes from being satisfied to being unsatisfied when the first operation is performed, determining that the impact value of the first operation on the second intent is a negative value; or

in comparison with a case of not performing the first operation, if a case that the constraint condition of the second intent has been satisfied remains unchanged when the first operation is performed, that is, the constraint condition of the second intent is always satisfied, determining that the impact value of the first operation on the second intent is zero.

**10.** The method according to any one of claims 7 to 9, wherein the determining, by the first network element, the first knowledge of the first intent comprises:

in comparison with a case of not performing the first operation, if the execution condition of the second intent changes from being satisfied to being unsatisfied when the first operation is performed, determining that the impact value of the first operation on the second intent is a negative value; or

in comparison with a case of not performing the first operation, if a case that the execution condition of the second intent has been satisfied remains unchanged when the first operation is performed, that is, the execution condition of the second intent is always satisfied, determining that the impact value of the first operation on the second intent is zero.

**11.** The method according to any one of claims 6 to 10, wherein the selecting, by the first network element, a first operation based on the first knowledge of the first intent comprises:
determining, by the first network element, the first operation from one or more existing intent operations based on the first fulfillment status of the first intent target, second knowledge corresponding to the one or more existing intent operations, and the first knowledge of the first intent.

**12.** A communication method, wherein the method comprises:

obtaining, by a second network element, a first intent operation from a first network element;

determining, by the second network element, that the first intent operation has impact on a second intent, wherein the second intent is different from a first intent; and

sending, by the second network element, first information to the first network element, wherein the first information indicates impact of the first intent operation on the second intent, the first information is for selection of a first operation, and the first operation is for executing the first intent.

**13.** A communication apparatus, wherein the apparatus comprises:

a processing unit, configured to obtain first knowledge of a first intent, wherein the first knowledge of the first intent comprises one or more of the following information: a first reliability of fulfilling a first intent target and first information, the first reliability indicates a reliability of fulfilling the first intent target, the first information indicates impact of a first intent operation on a second intent, and the second intent is different from the first intent; and
the processing unit is further configured to select a first operation based on the first knowledge of the first intent, wherein the first operation is for executing the first intent.

**14.** The communication apparatus according to claim 13, wherein the first information comprises an event and an impact value, the event comprises a constraint condition or an intent target or an execution condition of the second intent, and the impact value indicates a degree of impact on the event.

**15.** The communication apparatus according to claim 13 or 14, wherein the processing unit is configured to determine the first knowledge of the first intent; or
the apparatus further comprises:
a transceiver unit, configured to receive the first knowledge of the first intent from a second network element, wherein the second network element is a network management system NMS, a user, or an application APP.

**16.** The communication apparatus according to claim 15, wherein the processing unit is configured to obtain an intent keyword corresponding to an intent expression of the first intent, wherein the intent keyword comprises one or more of the following information: the first intent target, an area on which the first intent is executed, and a name of a network element for executing the first intent; and
the processing unit is further configured to obtain, from an intent knowledge repository based on the intent keyword, the first knowledge corresponding to the intent keyword.

**17.** The communication apparatus according to claim 15 or 16, wherein

the transceiver unit is further configured to obtain intent performance data from a third network element;
the processing unit is further configured to determine a satisfaction status of a first condition of the first intent based on the intent performance data, wherein the first condition comprises one or more of the following information: the first intent target, a constraint condition of the first intent, and an execution condition of the first intent; and
the processing unit is further configured to determine the first knowledge of the first intent based on the satisfaction status of the first condition and second knowledge of the first intent, wherein the second knowledge of the first intent is the first knowledge that is not updated.

**18.** The communication apparatus according to claim 17, wherein the first knowledge is the first reliability;

the processing unit is further configured to: if the first intent target is fulfilled, determine that the first reliability is a sum of a second reliability and a first reliability increment; or
the processing unit is further configured to: if the first intent target is unfulfilled, and a difference between a first fulfillment status of the first intent target and a second fulfillment status of the first intent target is a negative value, determine that the first reliability is a sum of a second reliability and a second reliability increment, wherein the second reliability increment is less than a first reliability increment; or
the processing unit is further configured to: if the first intent target is unfulfilled, and a difference between a first fulfillment status and a second fulfillment status is a positive value, determine that the first reliability is a difference between a second reliability and a third reliability increment, wherein
the second reliability is the first reliability that is not updated, the first fulfillment status is an absolute value of a difference between a fulfillment status of the first intent target in a first time period and the first intent target, the second fulfillment status is an absolute value of a difference between a fulfillment status of the first intent target in a second time period and the first intent target, and the second time period is earlier than the first time period.

**19.** The communication apparatus according to any one of claims 15 to 18, wherein the impact value indicates an impact value of the first operation on the constraint condition or the intent target or the execution condition of the second intent.

**20.** The communication apparatus according to claim 19, wherein

the processing unit is further configured to: if the intent target of the second intent changes from being fulfilled to being unfulfilled, determine that the impact value of the first operation on the second intent is a negative value; or
the processing unit is further configured to: if the intent target of the second intent has been fulfilled with a fulfillment status unchanged, determine that the impact value of the first operation on the second intent is zero.

**21.** The communication apparatus according to claim 19 or 20, wherein

the processing unit is further configured to: in comparison with a case of not performing the first operation, if the constraint condition of the second intent changes from being satisfied to being unsatisfied when the first operation is performed, determine that the impact value of the first operation on the second intent is a negative value; or
the processing unit is further configured to: in comparison with a case of not performing the first operation, if a case that the constraint condition of the second intent has been satisfied remains unchanged when the first operation is performed, that is, the constraint condition of the second intent is always satisfied, determine that the impact value of the first operation on the second intent is zero.

**22.** The communication apparatus according to any one of claims 19 to 21, wherein

the processing unit is further configured to: in comparison with a case of not performing the first operation, if the execution condition of the second intent changes from being satisfied to being unsatisfied when the first operation is performed, determine that the impact value of the first operation on the second intent is a negative value; or
the processing unit is further configured to: in comparison with a case of not performing the first operation, if a case that the execution condition of the second intent has been satisfied remains unchanged when the first operation is performed, that is, the execution condition of the second intent is always satisfied, determine that the impact value of the first operation on the second intent is zero.

**23.** The communication apparatus according to any one of claims 18 to 22, wherein the processing unit is further configured to determine the first operation from one or more existing intent operations based on the first fulfillment status of the first intent target, second knowledge corresponding to the one or more existing intent operations, and the first knowledge of the first intent.

**24.** A communication apparatus, wherein the apparatus comprises:

a transceiver unit, configured to obtain a first intent operation from a first network element;
a processing unit, configured to determine that the first intent operation has impact on a second intent, wherein the second intent is different from a first intent; and
the transceiver unit is further configured to send first information to the first network element, wherein the first information indicates impact of the first intent operation on the second intent, the first information is for selection of a first operation, and the first operation is for executing the first intent.

**25.** A communication system, comprising the communication apparatus according to any one of claims 13 to 23 and the communication apparatus according to claim 24.

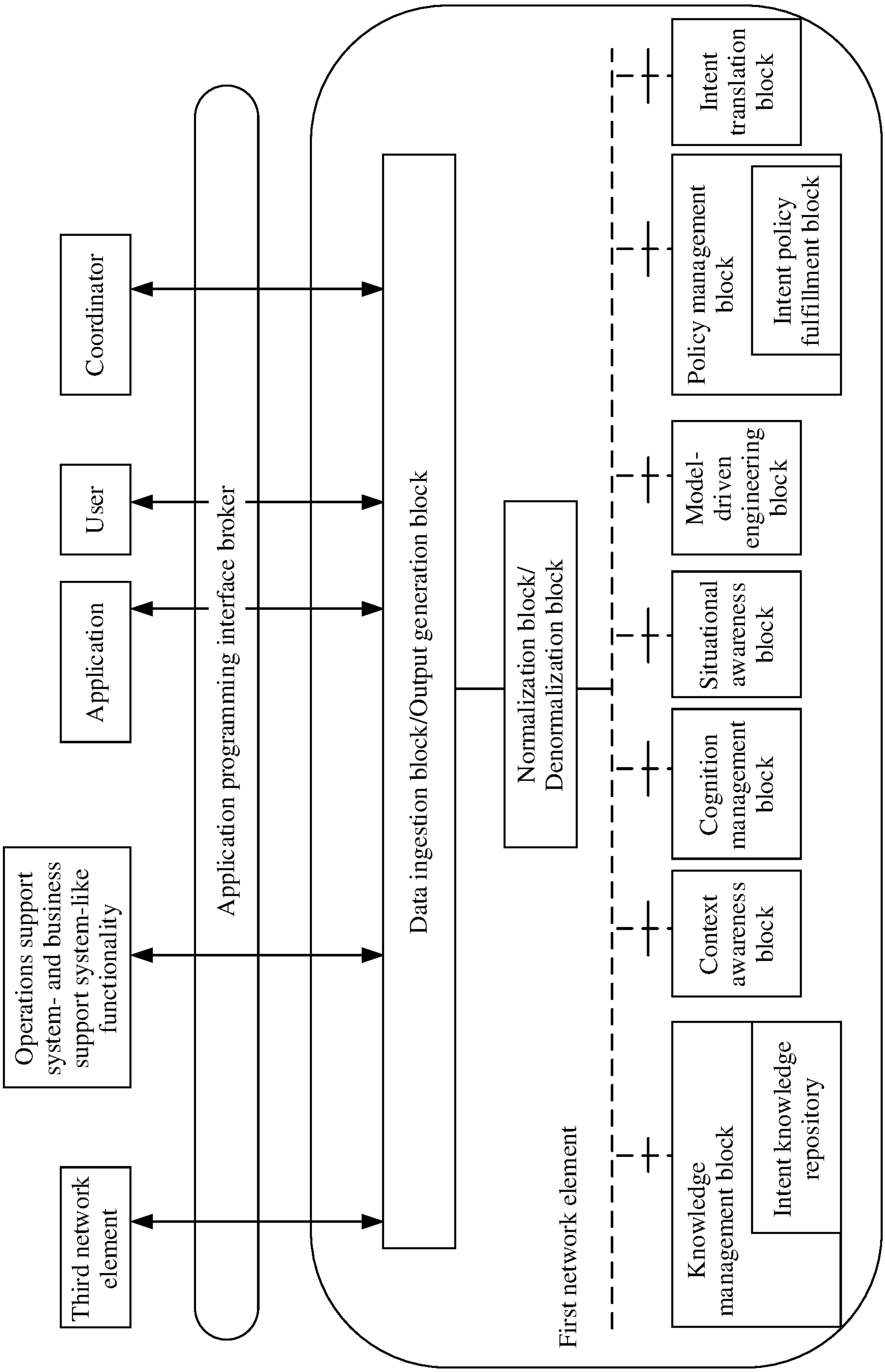
Third network element
Operations support system- and business support system-like functionality
Application
User
Coordinator
Application programming interface broker
Data ingestion block/Output generation block
Normalization block/ Denormalization block
First network element
Knowledge management block
Intent knowledge repository
Context awareness block
Cognition management block
Situational awareness block
Model-driven engineering block
Policy management block
Intent policy fulfillment block
Intent translation block

FIG. 1

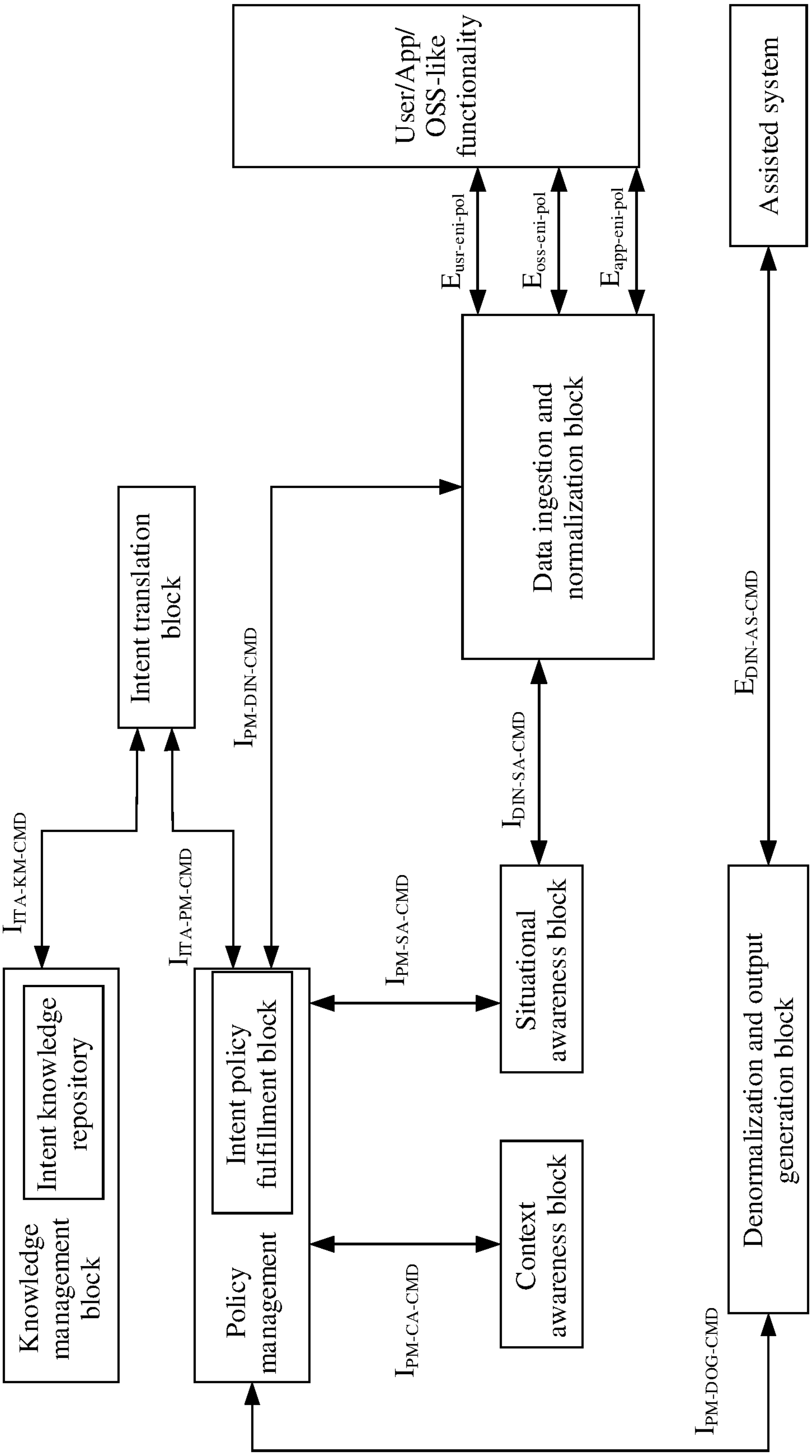
User/App/ OSS-like functionality
Assisted system
$E_{usr\text{-}eni\text{-}pol}$
$E_{oss\text{-}eni\text{-}pol}$
$E_{app\text{-}eni\text{-}pol}$
Data ingestion and normalization block
Intent translation block
$I_{PM\text{-}DIN\text{-}CMD}$
$E_{DIN\text{-}AS\text{-}CMD}$
$I_{DIN\text{-}SA\text{-}CMD}$
$I_{ITA\text{-}KM\text{-}CMD}$
$I_{ITA\text{-}PM\text{-}CMD}$
$I_{PM\text{-}SA\text{-}CMD}$
Knowledge management block
Intent knowledge repository
Policy management
Intent policy fulfillment block
Situational awareness block
Context awareness block
$I_{PM\text{-}CA\text{-}CMD}$
Denormalization and output generation block
$I_{PM\text{-}DOG\text{-}CMD}$

FIG. 2

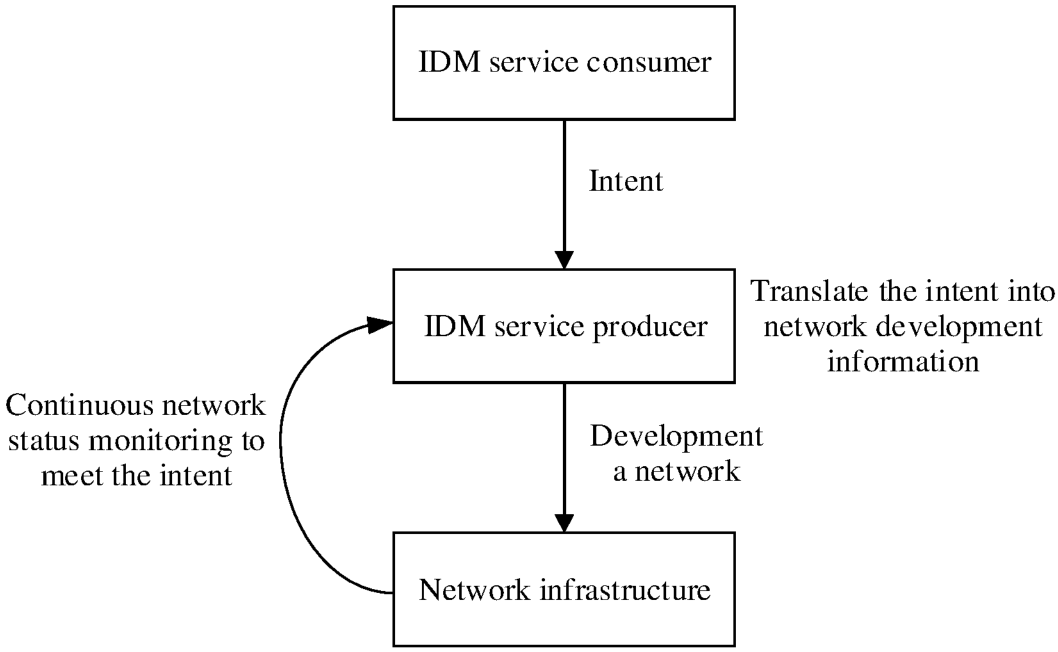
IDM service consumer
Intent
IDM service producer
Translate the intent into network development information
Continuous network status monitoring to meet the intent
Development a network
Network infrastructure

FIG. 3

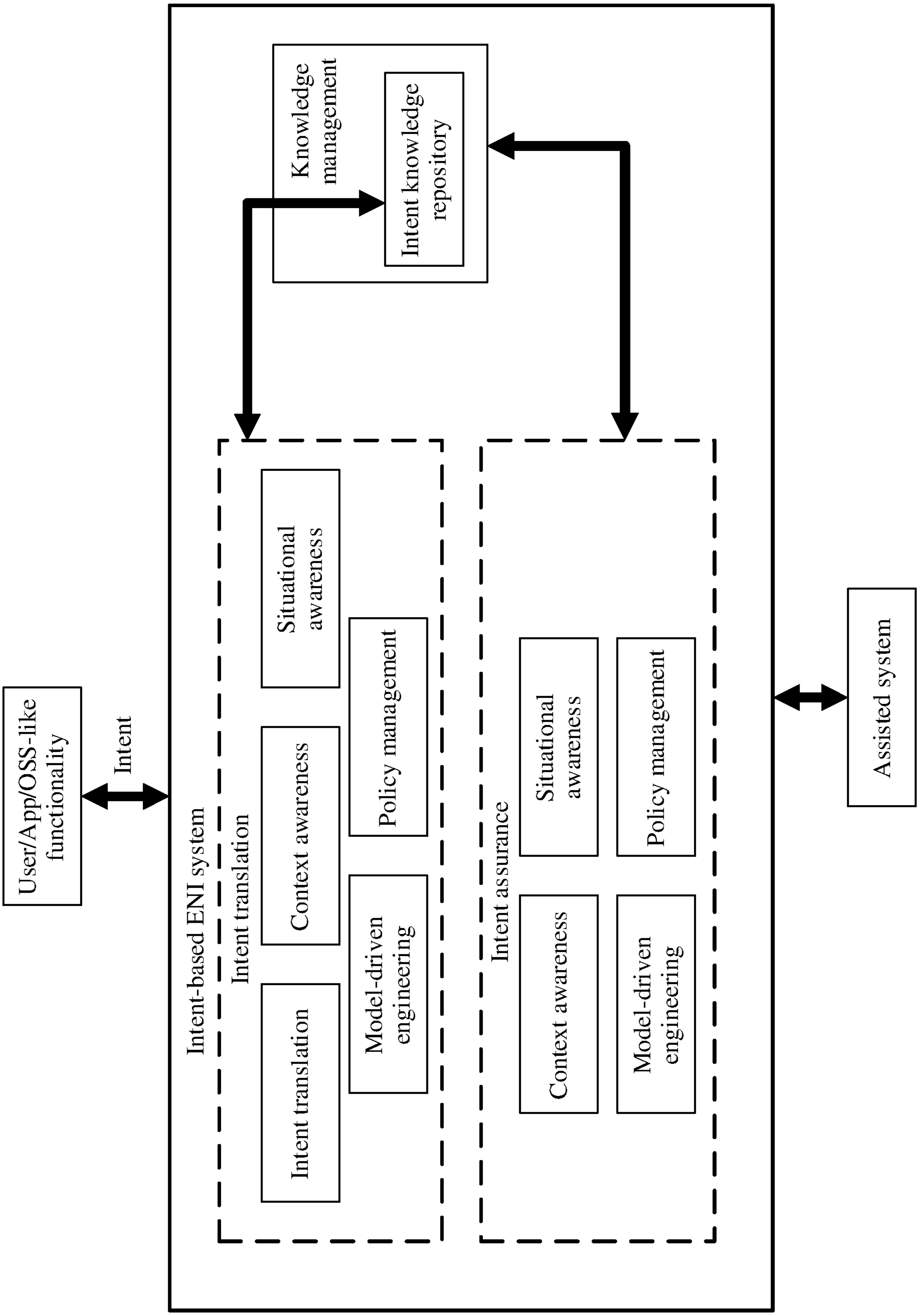
User/App/OSS-like functionality
Intent
Intent-based ENI system
Intent translation
Intent translation
Context awareness
Situational awareness
Model-driven engineering
Policy management
Knowledge management
Intent knowledge repository
Intent assurance
Context awareness
Situational awareness
Model-driven engineering
Policy management
Assisted system

FIG. 4

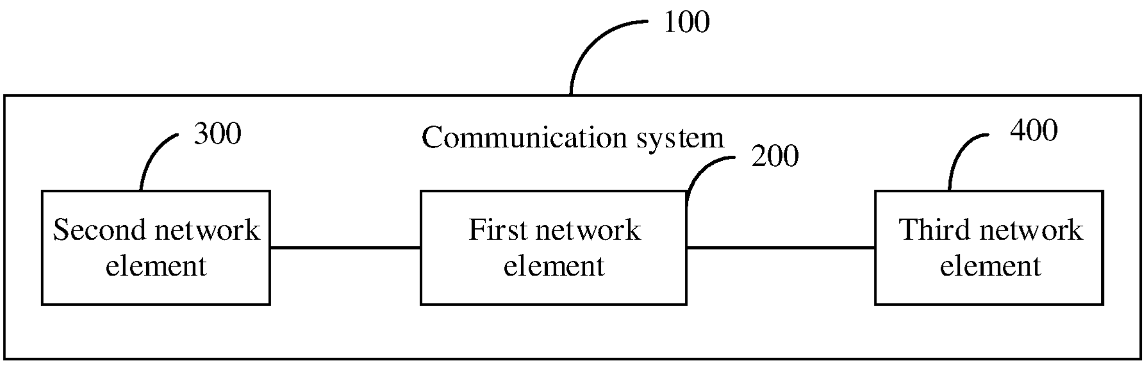
100
Communication system
300
Second network element
200
First network element
400
Third network element

FIG. 5

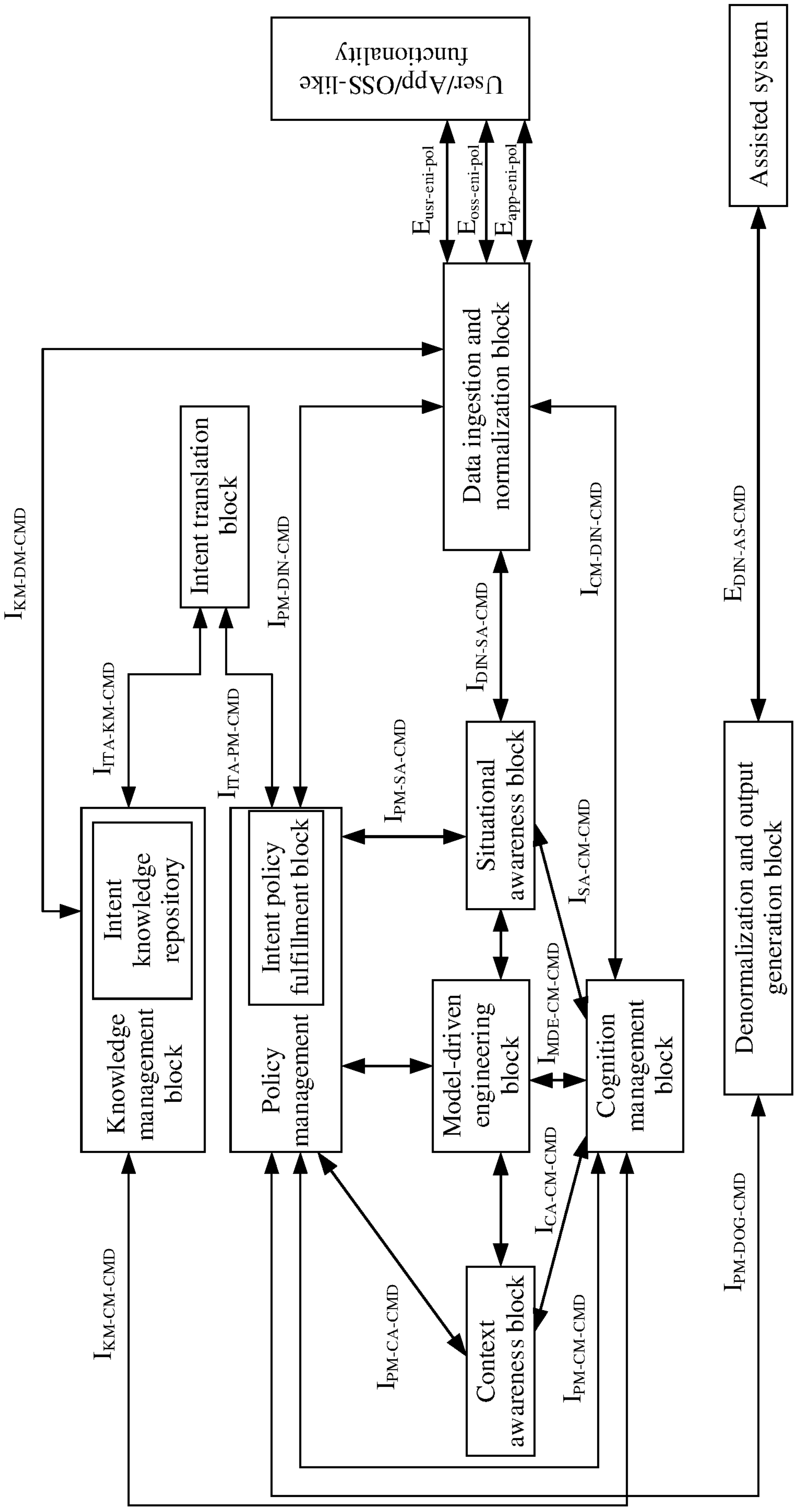
User/App/OSS-like functionality
$E_{usr\text{-}eni\text{-}pol}$
$E_{oss\text{-}eni\text{-}pol}$
$E_{app\text{-}eni\text{-}pol}$
Assisted system
Data ingestion and normalization block
Intent translation block
$I_{KM\text{-}DM\text{-}CMD}$
$I_{PM\text{-}DIN\text{-}CMD}$
$I_{CM\text{-}DIN\text{-}CMD}$
$E_{DIN\text{-}AS\text{-}CMD}$
$I_{DIN\text{-}SA\text{-}CMD}$
$I_{ITA\text{-}KM\text{-}CMD}$
$I_{ITA\text{-}PM\text{-}CMD}$
$I_{PM\text{-}SA\text{-}CMD}$
Situational awareness block
$I_{SA\text{-}CM\text{-}CMD}$
Knowledge management block
Intent knowledge repository
Policy management
Intent policy fulfillment block
Model-driven engineering block
$I_{MDE\text{-}CM\text{-}CMD}$
Cognition management block
Denormalization and output generation block
$I_{KM\text{-}CM\text{-}CMD}$
$I_{PM\text{-}CA\text{-}CMD}$
$I_{CA\text{-}CM\text{-}CMD}$
Context awareness block
$I_{PM\text{-}CM\text{-}CMD}$
$I_{PM\text{-}DOG\text{-}CMD}$

FIG. 6

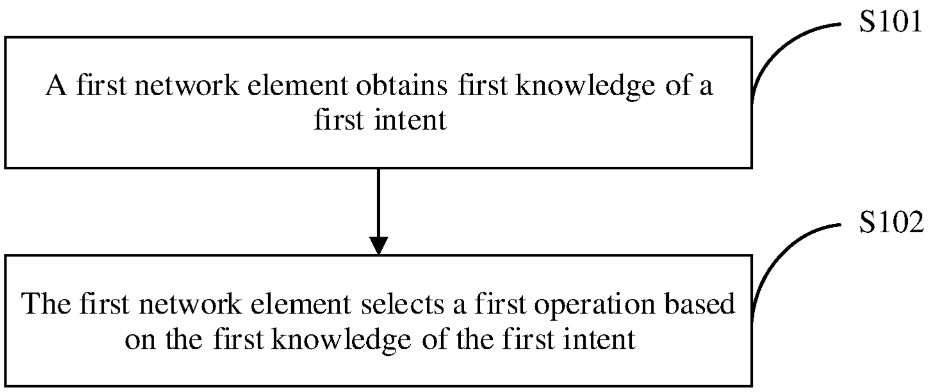
S101
A first network element obtains first knowledge of a first intent
S102
The first network element selects a first operation based on the first knowledge of the first intent

FIG. 7

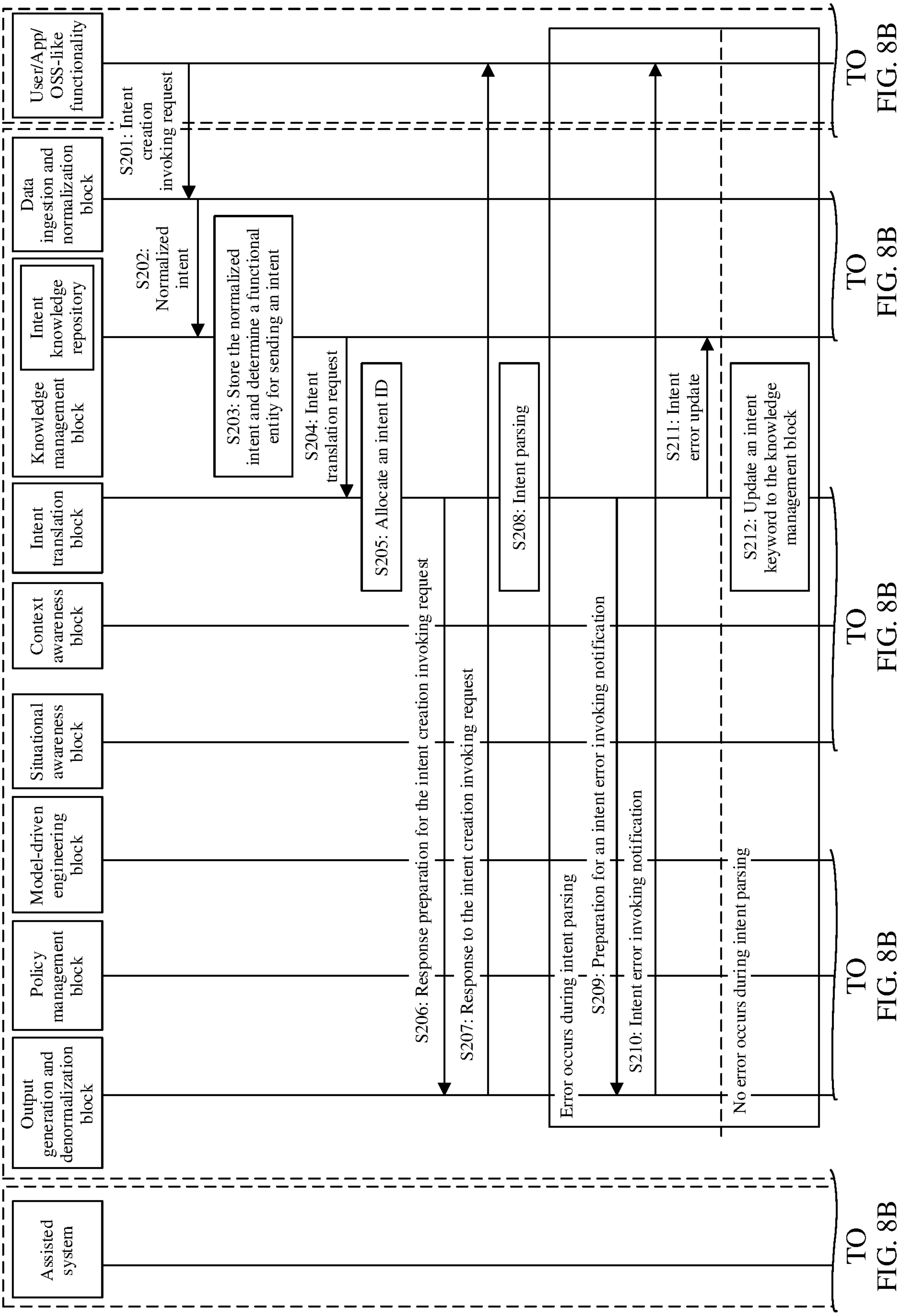
User/App/ OSS-like functionality
Data ingestion and normalization block
Intent knowledge repository
Knowledge management block
Intent translation block
Context awareness block
Situational awareness block
Model-driven engineering block
Policy management block
Output generation and denormalization block
Assisted system
S201: Intent creation invoking request
S202: Normalized intent
S203: Store the normalized intent and determine a functional entity for sending an intent
S204: Intent translation request
S205: Allocate an intent ID
S206: Response preparation for the intent creation invoking request
S207: Response to the intent creation invoking request
S208: Intent parsing
Error occurs during intent parsing
S209: Preparation for an intent error invoking notification
S210: Intent error invoking notification
S211: Intent error update
No error occurs during intent parsing
S212: Update an intent keyword to the knowledge management block
TO FIG. 8B
TO FIG. 8B
TO FIG. 8B
TO FIG. 8B
TO FIG. 8B

FIG. 8A

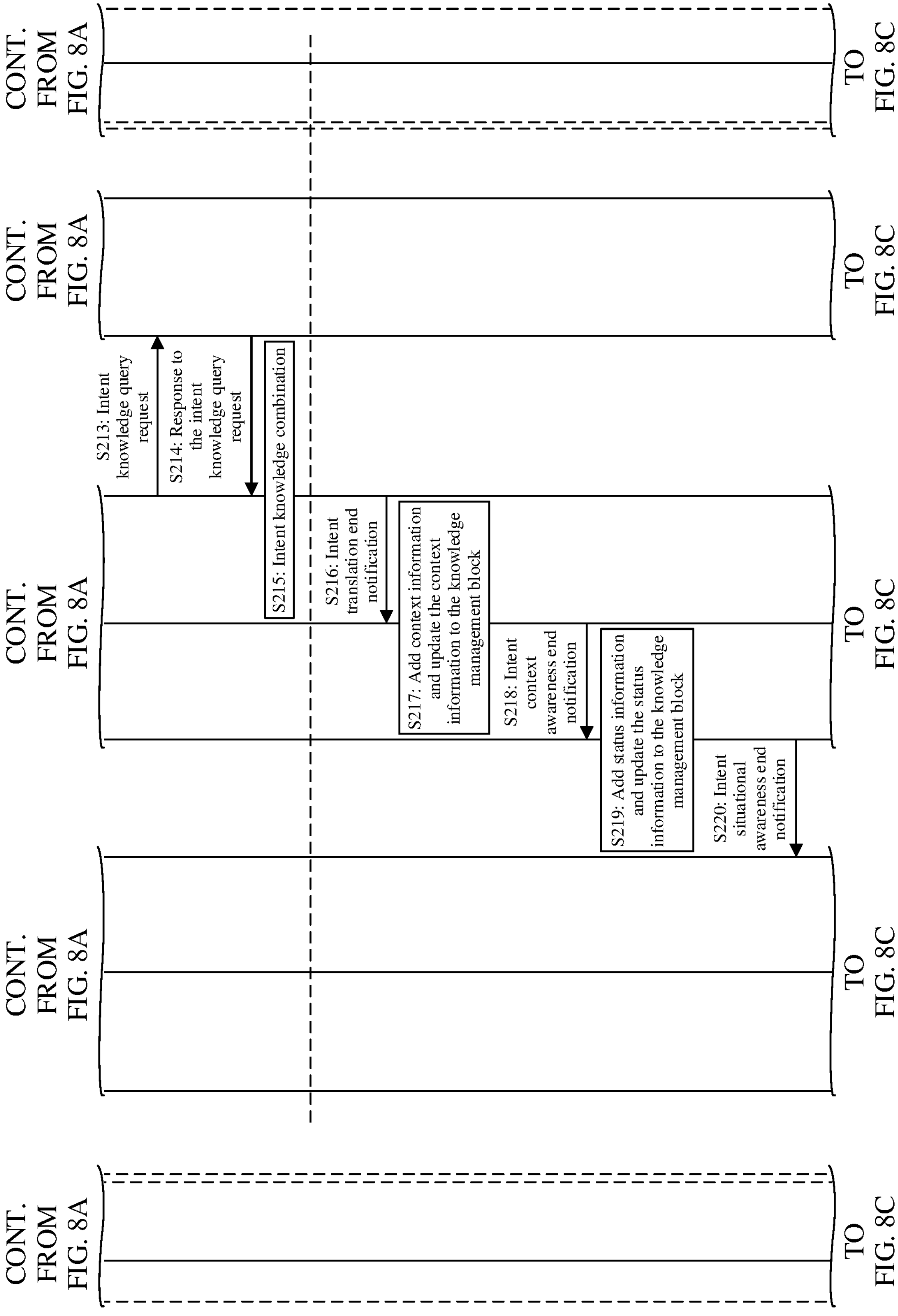
CONT. FROM FIG. 8A
CONT. FROM FIG. 8A
CONT. FROM FIG. 8A
CONT. FROM FIG. 8A
CONT. FROM FIG. 8A
S213: Intent knowledge query request
S214: Response to the intent knowledge query request
S215: Intent knowledge combination
S216: Intent translation end notification
S217: Add context information and update the context information to the knowledge management block
S218: Intent context awareness end notification
S219: Add status information and update the status information to the knowledge management block
S220: Intent situational awareness end notification
TO FIG. 8C
TO FIG. 8C
TO FIG. 8C
TO FIG. 8C
TO FIG. 8C

FIG. 8B

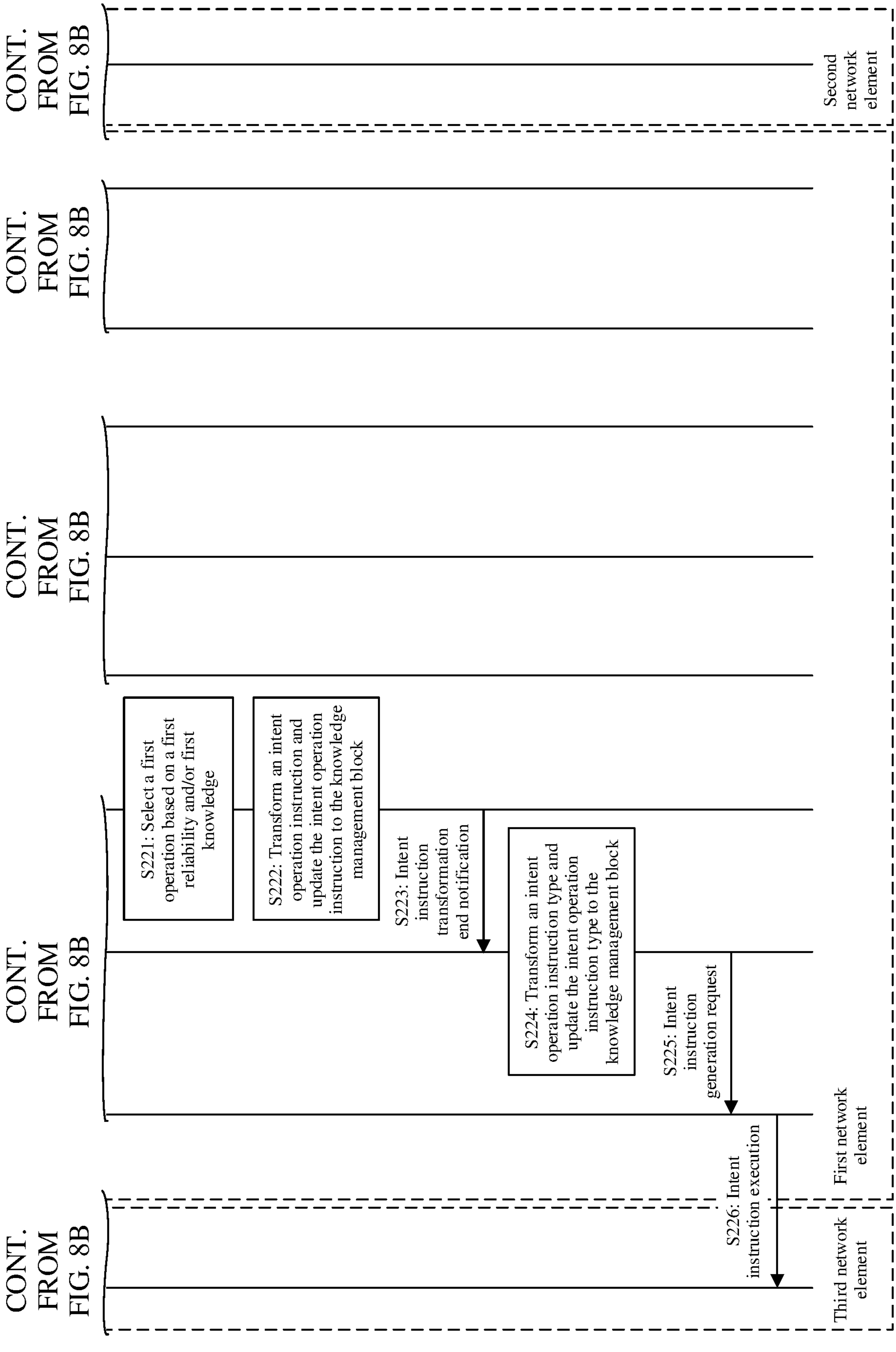
CONT. FROM FIG. 8B
CONT. FROM FIG. 8B
CONT. FROM FIG. 8B
CONT. FROM FIG. 8B
CONT. FROM FIG. 8B
Third network element
First network element
Second network element
S221: Select a first operation based on a first reliability and/or first knowledge
S222: Transform an intent operation instruction and update the intent operation instruction to the knowledge management block
S223: Intent instruction transformation end notification
S224: Transform an intent operation instruction type and update the intent operation instruction type to the knowledge management block
S225: Intent instruction generation request
S226: Intent instruction execution

FIG. 8C

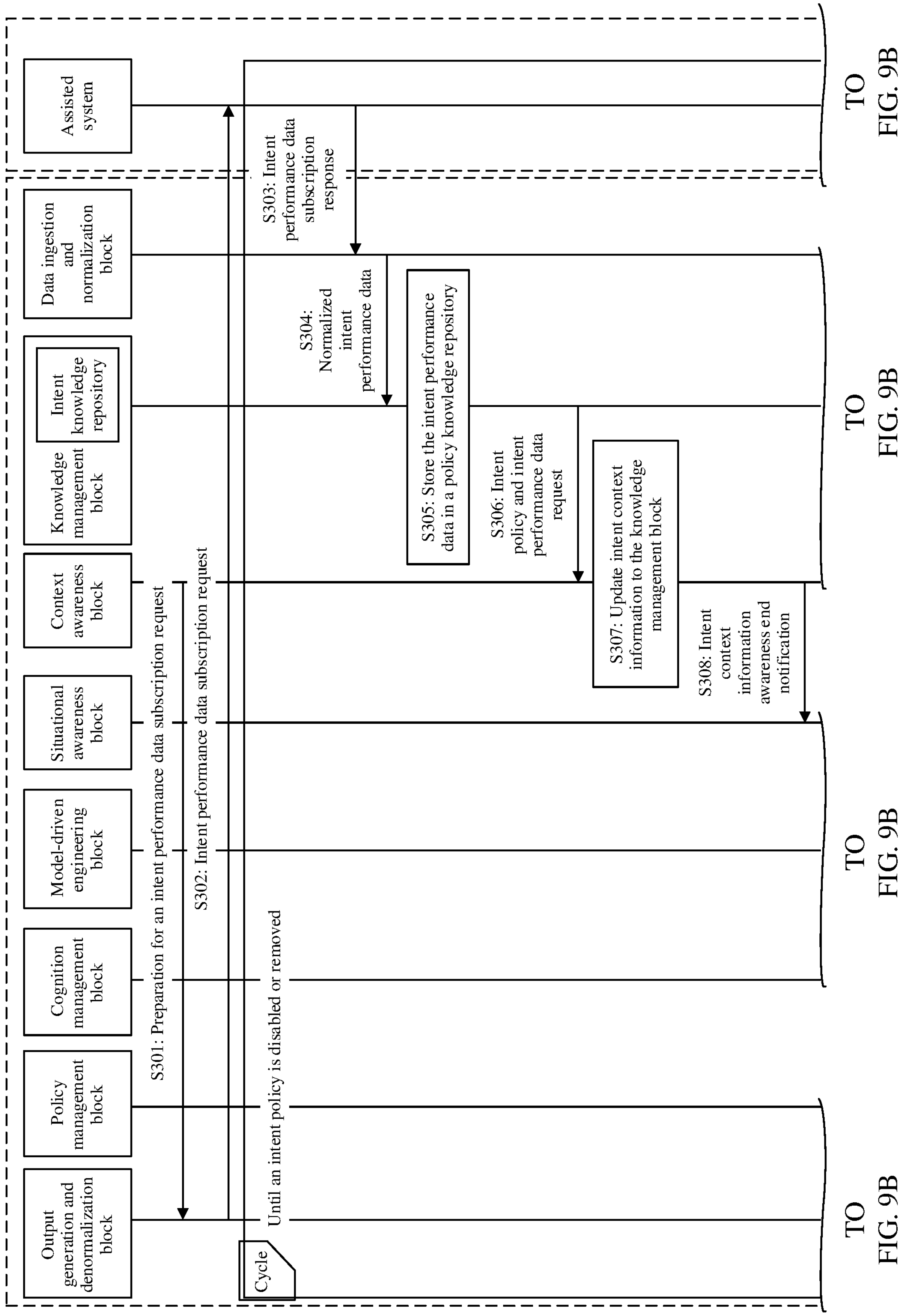
Output generation and denormalization block
Policy management block
Cognition management block
Model-driven engineering block
Situational awareness block
Context awareness block
Knowledge management block
Intent knowledge repository
Data ingestion and normalization block
Assisted system
S301: Preparation for an intent performance data subscription request
S302: Intent performance data subscription request
S303: Intent performance data subscription response
S304: Normalized intent performance data
S305: Store the intent performance data in a policy knowledge repository
S306: Intent policy and intent performance data request
S307: Update intent context information to the knowledge management block
S308: Intent context information awareness end notification
Cycle
Until an intent policy is disabled or removed
TO FIG. 9B
TO FIG. 9B
TO FIG. 9B
TO FIG. 9B

FIG. 9A

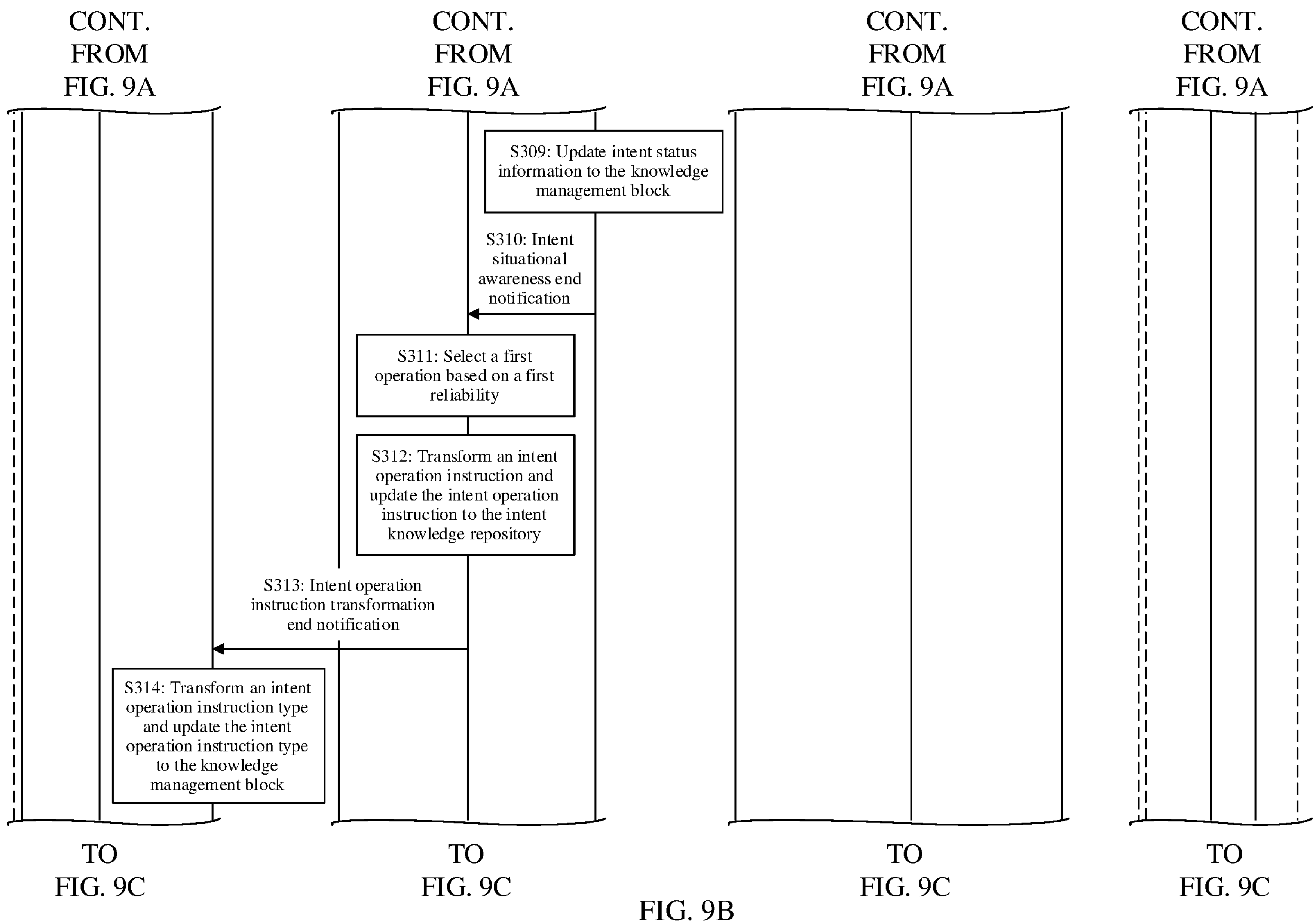
CONT. FROM FIG. 9A
CONT. FROM FIG. 9A
CONT. FROM FIG. 9A
CONT. FROM FIG. 9A
S309: Update intent status information to the knowledge management block
S310: Intent situational awareness end notification
S311: Select a first operation based on a first reliability
S312: Transform an intent operation instruction and update the intent operation instruction to the intent knowledge repository
S313: Intent operation instruction transformation end notification
S314: Transform an intent operation instruction type and update the intent operation instruction type to the knowledge management block
TO FIG. 9C
TO FIG. 9C
TO FIG. 9C
TO FIG. 9C

FIG. 9B

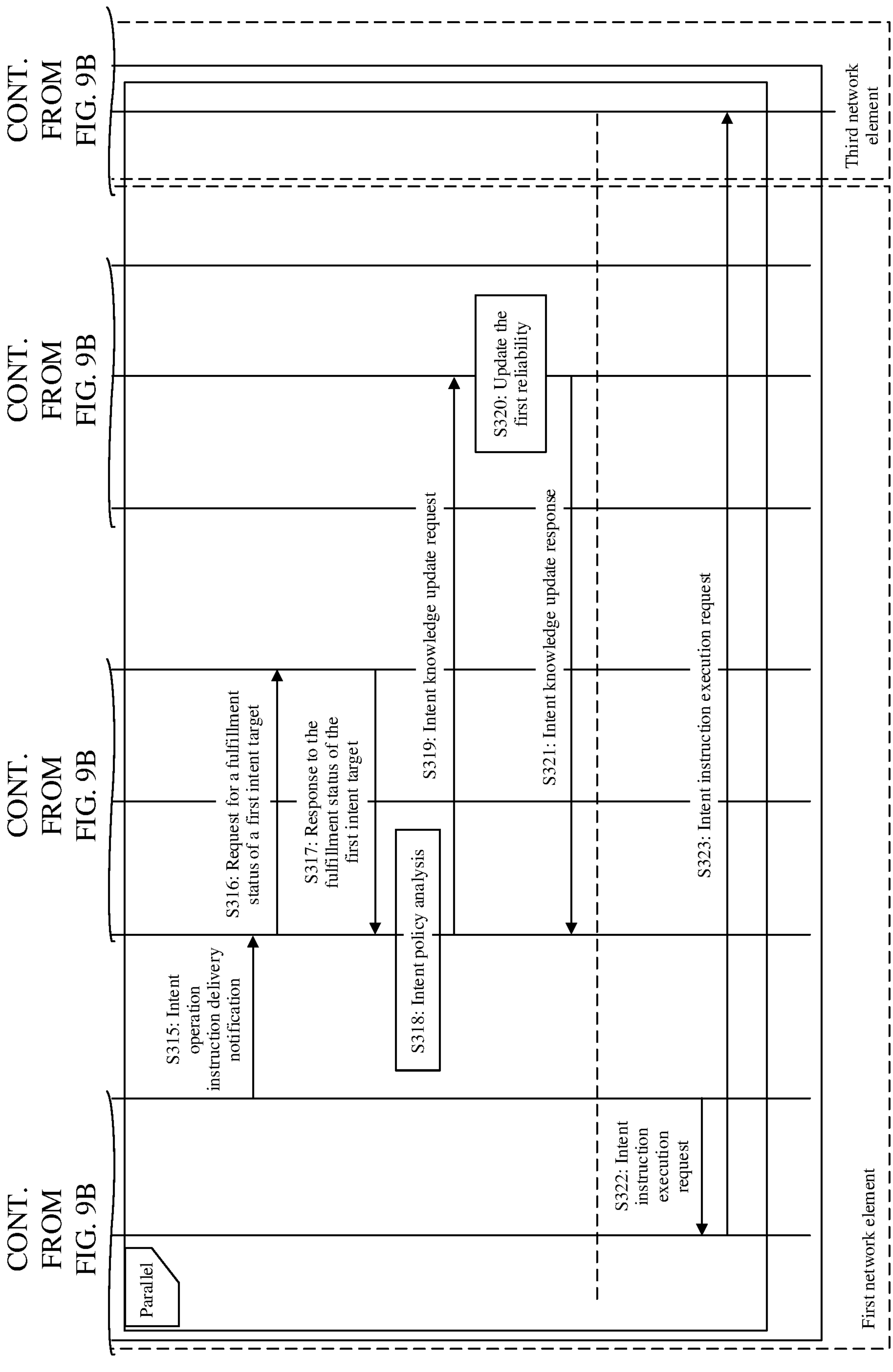
CONT. FROM FIG. 9B
CONT. FROM FIG. 9B
CONT. FROM FIG. 9B
CONT. FROM FIG. 9B
Parallel
S315: Intent operation instruction delivery notification
S316: Request for a fulfillment status of a first intent target
S317: Response to the fulfillment status of the first intent target
S318: Intent policy analysis
S319: Intent knowledge update request
S320: Update the first reliability
S321: Intent knowledge update response
S322: Intent instruction execution request
S323: Intent instruction execution request
First network element
Third network element

FIG. 9C

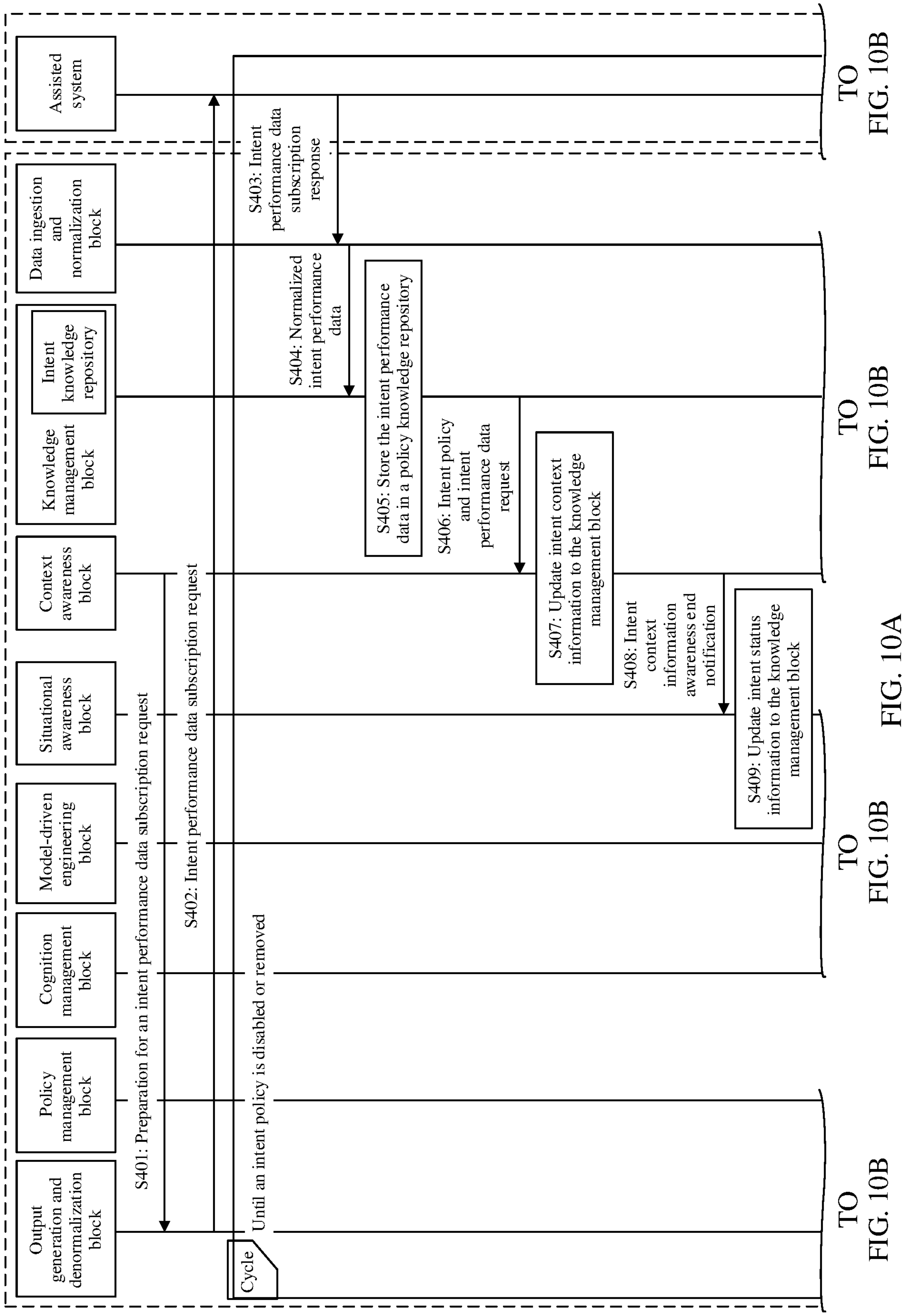
Assisted system
Data ingestion and normalization block
Intent knowledge repository
Knowledge management block
Context awareness block
Situational awareness block
Model-driven engineering block
Cognition management block
Policy management block
Output generation and denormalization block
S401: Preparation for an intent performance data subscription request
S402: Intent performance data subscription request
Cycle
Until an intent policy is disabled or removed
S403: Intent performance data subscription response
S404: Normalized intent performance data
S405: Store the intent performance data in a policy knowledge repository
S406: Intent policy and intent performance data request
S407: Update intent context information to the knowledge management block
S408: Intent context information awareness end notification
S409: Update intent status information to the knowledge management block
TO FIG. 10B
TO FIG. 10B
TO FIG. 10B
TO FIG. 10B
FIG. 10A

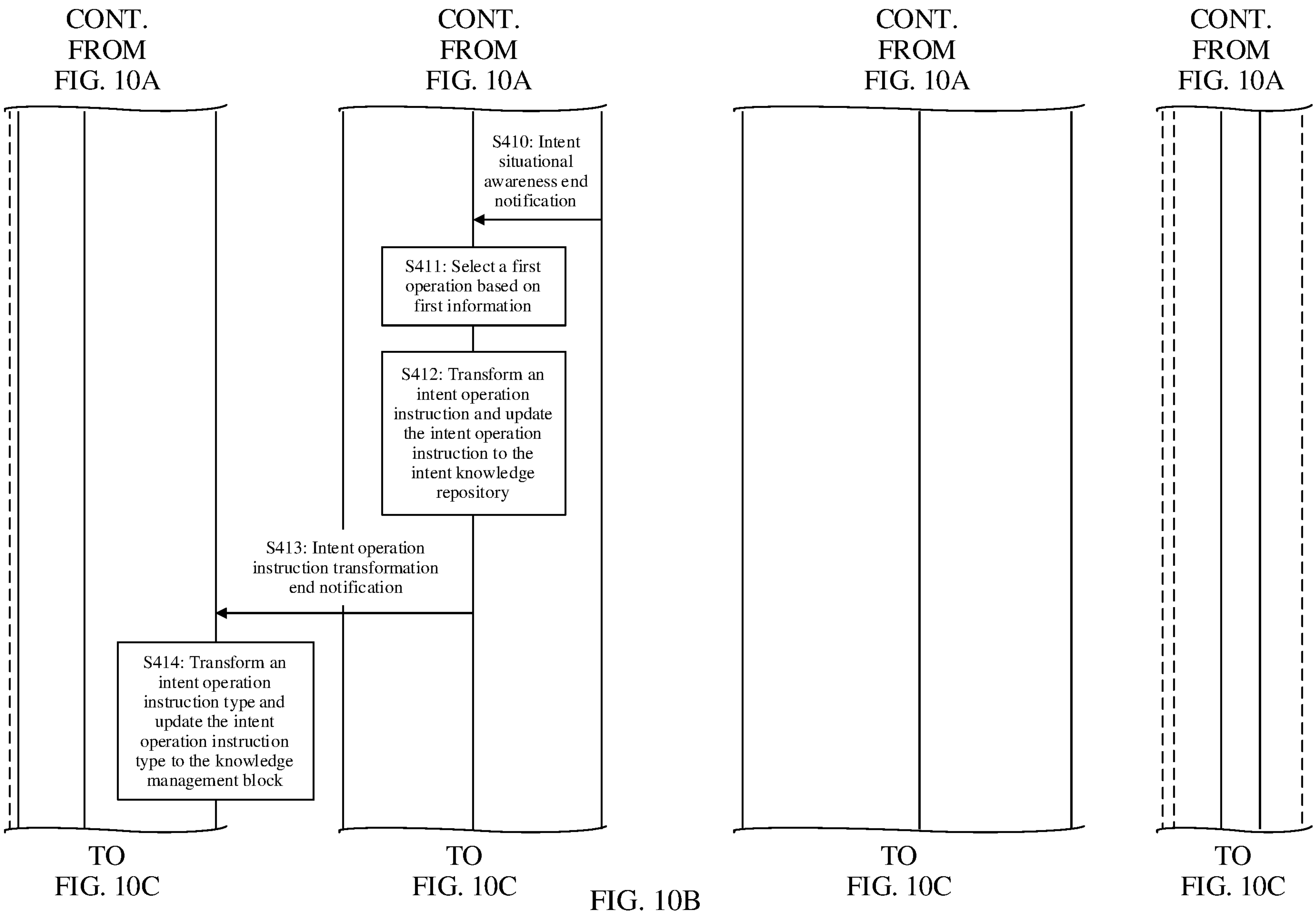
CONT.
FROM
FIG. 10A
CONT.
FROM
FIG. 10A
CONT.
FROM
FIG. 10A
CONT.
FROM
FIG. 10A
S410: Intent situational awareness end notification
S411: Select a first operation based on first information
S412: Transform an intent operation instruction and update the intent operation instruction to the intent knowledge repository
S413: Intent operation instruction transformation end notification
S414: Transform an intent operation instruction type and update the intent operation instruction type to the knowledge management block
TO
FIG. 10C
TO
FIG. 10C
TO
FIG. 10C
TO
FIG. 10C

FIG. 10B

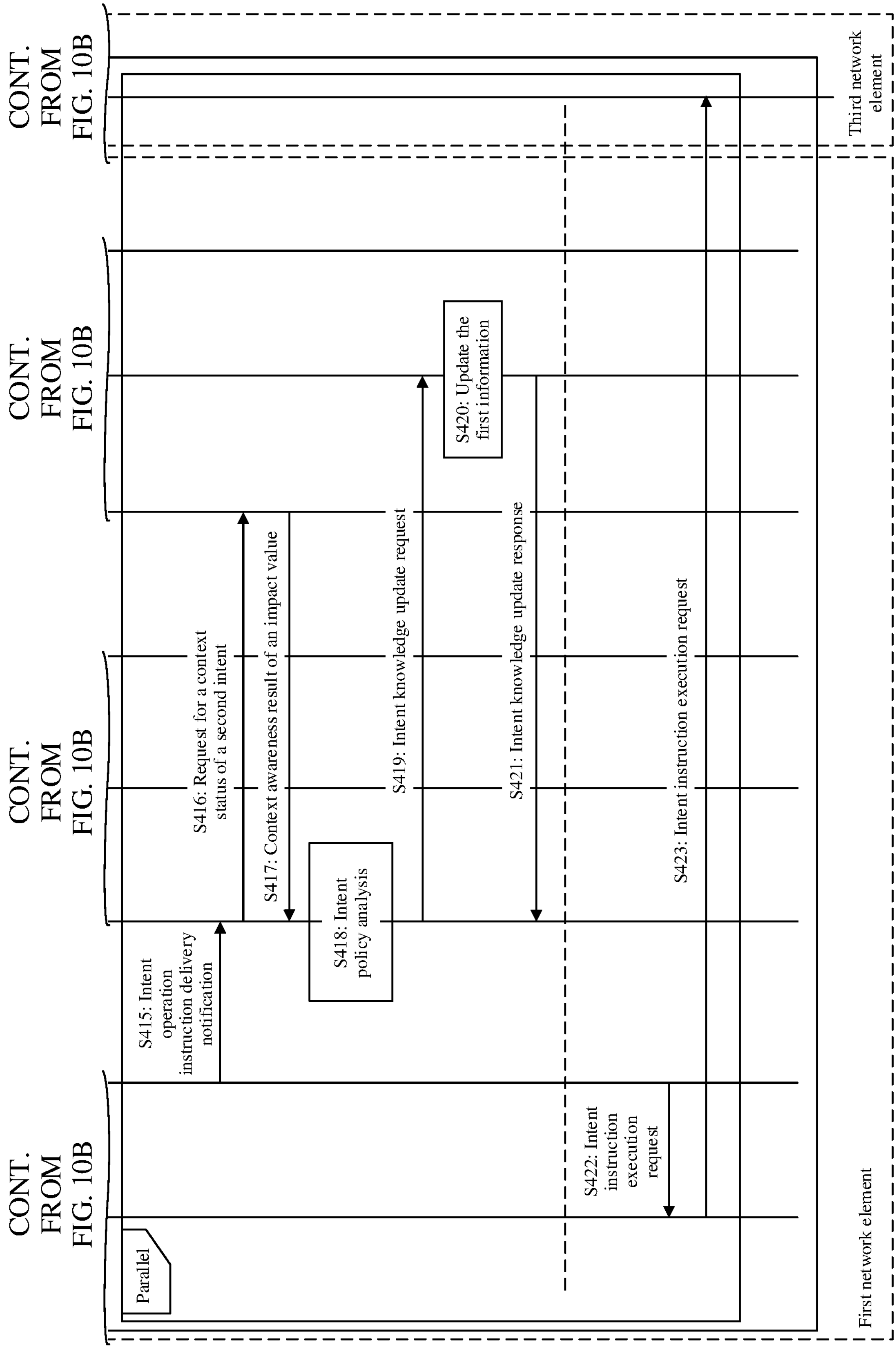
CONT. FROM FIG. 10B
CONT. FROM FIG. 10B
CONT. FROM FIG. 10B
CONT. FROM FIG. 10B
First network element
Third network element
Parallel
S415: Intent operation instruction delivery notification
S416: Request for a context status of a second intent
S417: Context awareness result of an impact value
S418: Intent policy analysis
S419: Intent knowledge update request
S420: Update the first information
S421: Intent knowledge update response
S422: Intent instruction execution request
S423: Intent instruction execution request

FIG. 10C

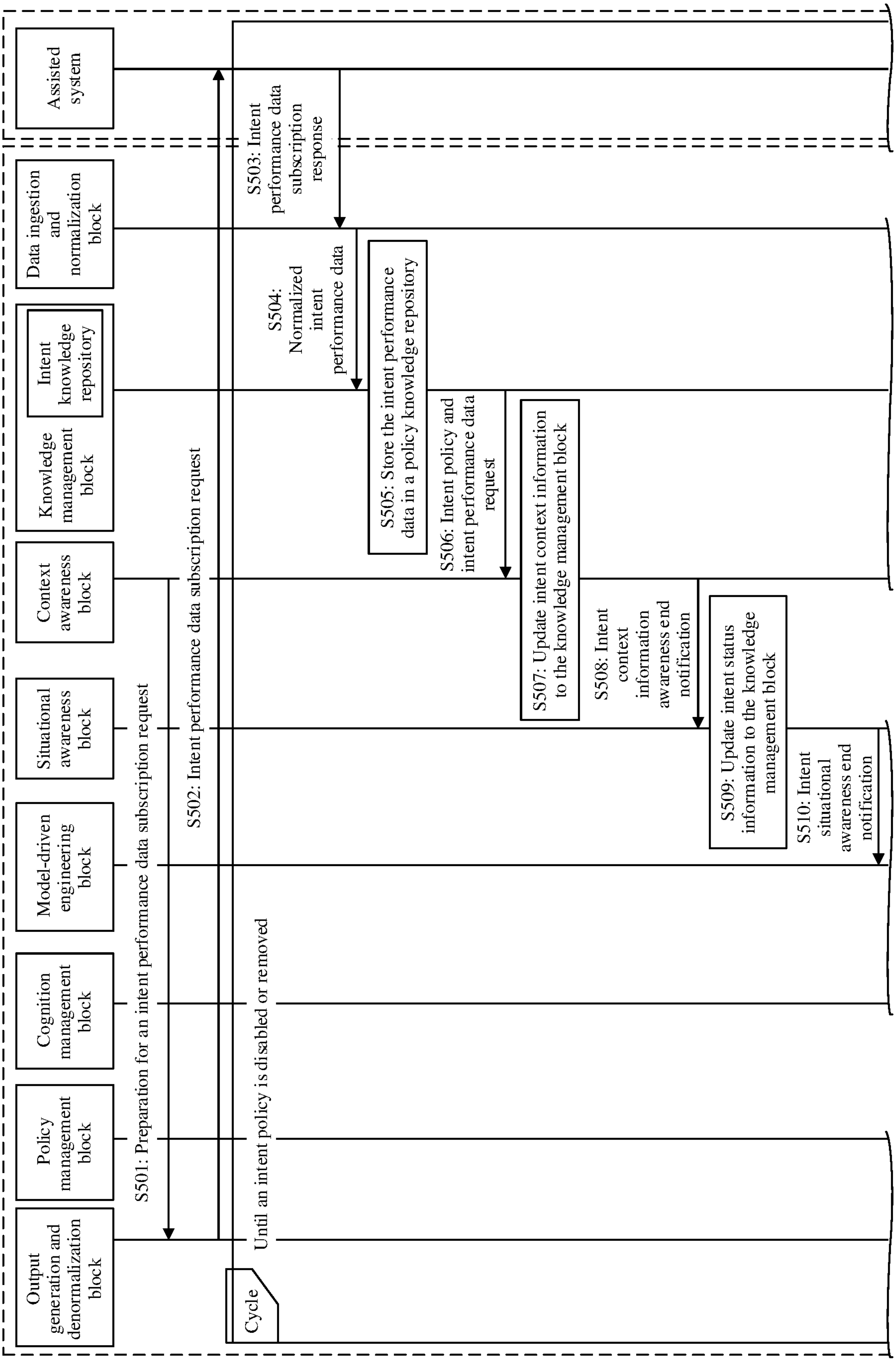


TO FIG. 11B

TO FIG. 11B

FIG. 11A

TO FIG. 11B

TO FIG. 11B

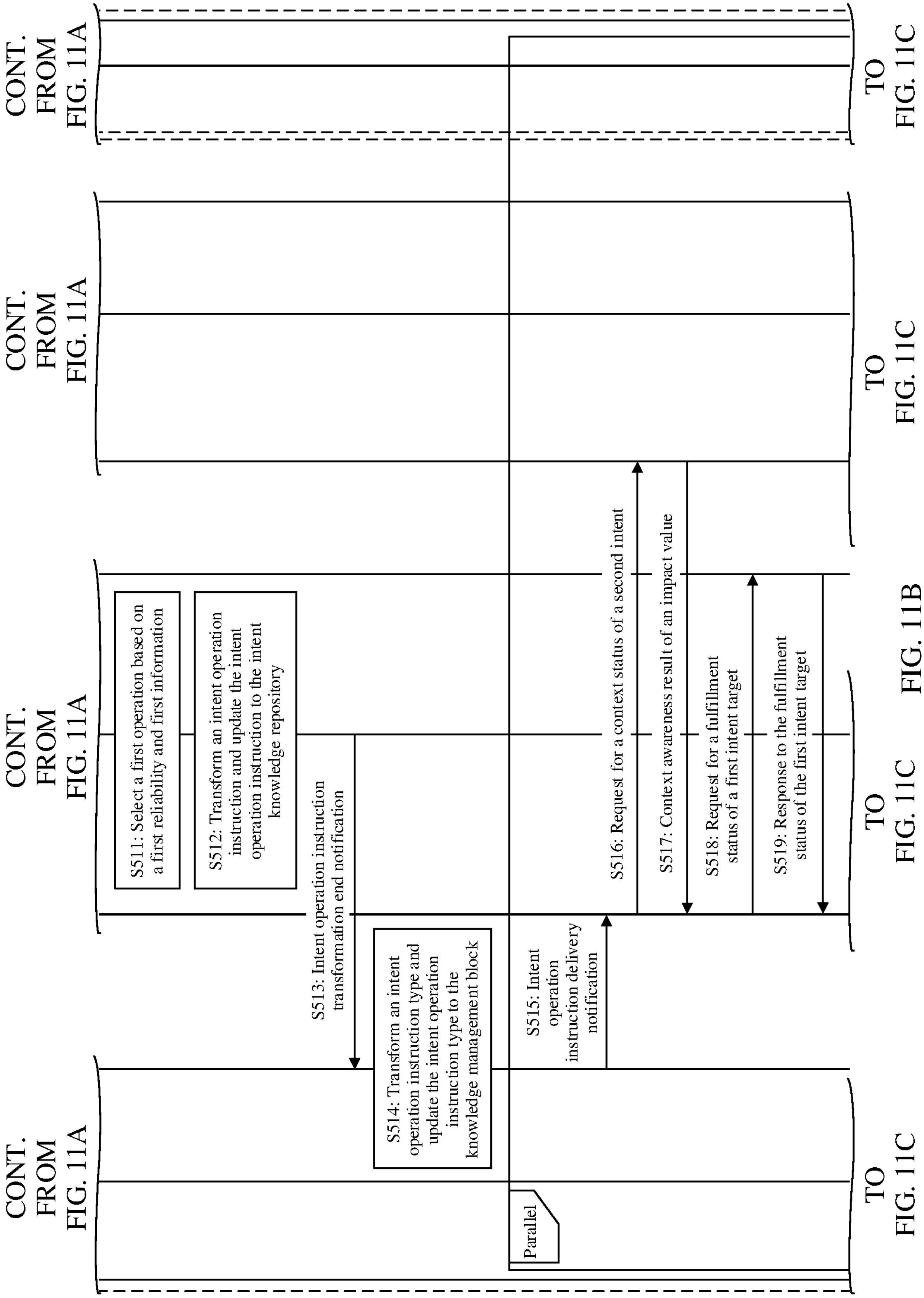
CONT. FROM FIG. 11A
CONT. FROM FIG. 11A
CONT. FROM FIG. 11A
CONT. FROM FIG. 11A
S511: Select a first operation based on a first reliability and first information
S512: Transform an intent operation instruction and update the intent operation instruction to the intent knowledge repository
S513: Intent operation instruction transformation end notification
S514: Transform an intent operation instruction type and update the intent operation instruction type to the knowledge management block
S515: Intent operation instruction delivery notification
S516: Request for a context status of a second intent
S517: Context awareness result of an impact value
S518: Request for a fulfillment status of a first intent target
S519: Response to the fulfillment status of the first intent target
Parallel
TO FIG. 11C
TO FIG. 11C
TO FIG. 11C
TO FIG. 11C

FIG. 11B

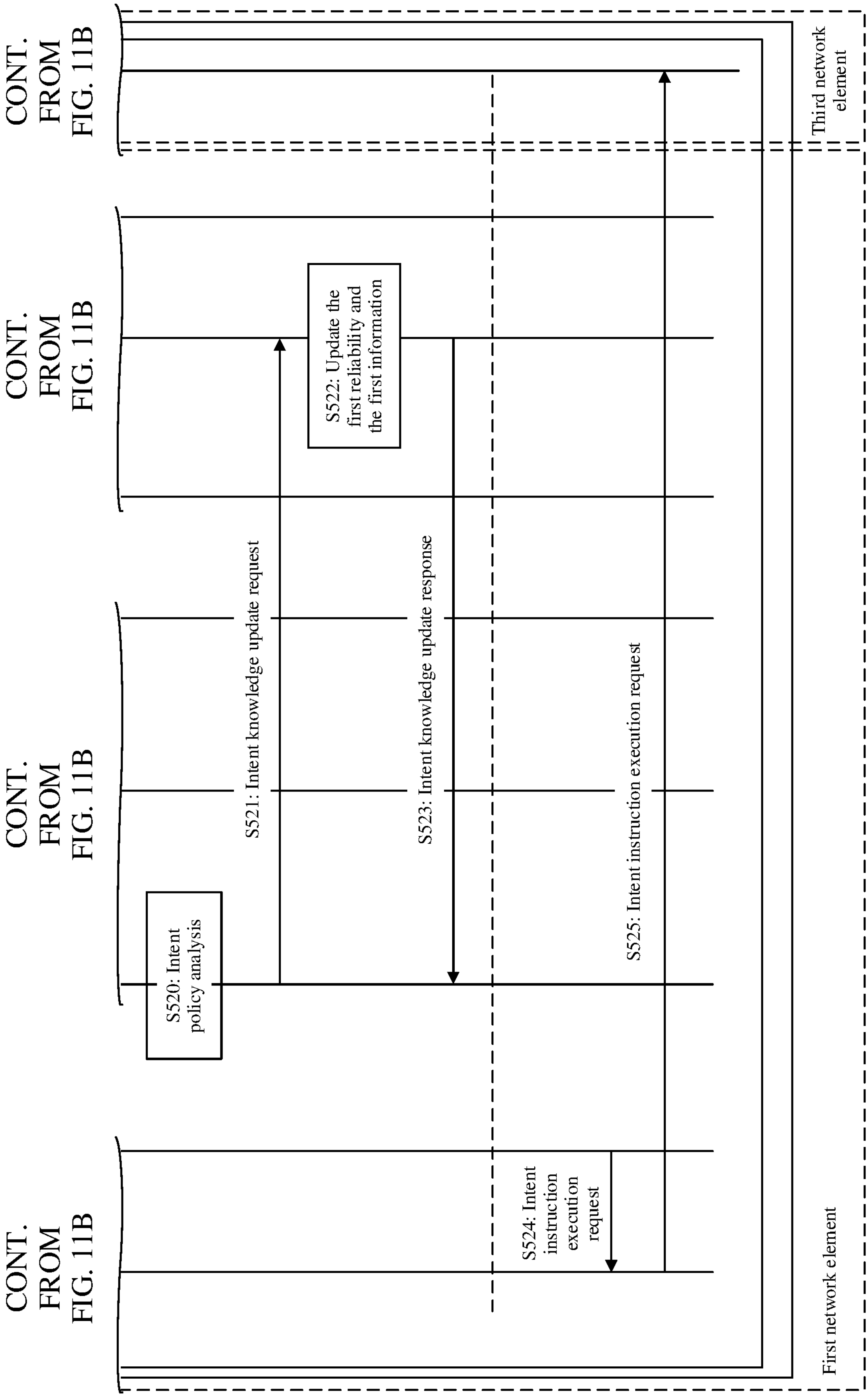
CONT. FROM FIG. 11B
CONT. FROM FIG. 11B
CONT. FROM FIG. 11B
CONT. FROM FIG. 11B
First network element
Third network element
S520: Intent policy analysis
S521: Intent knowledge update request
S522: Update the first reliability and the first information
S523: Intent knowledge update response
S524: Intent instruction execution request
S525: Intent instruction execution request

FIG. 11C

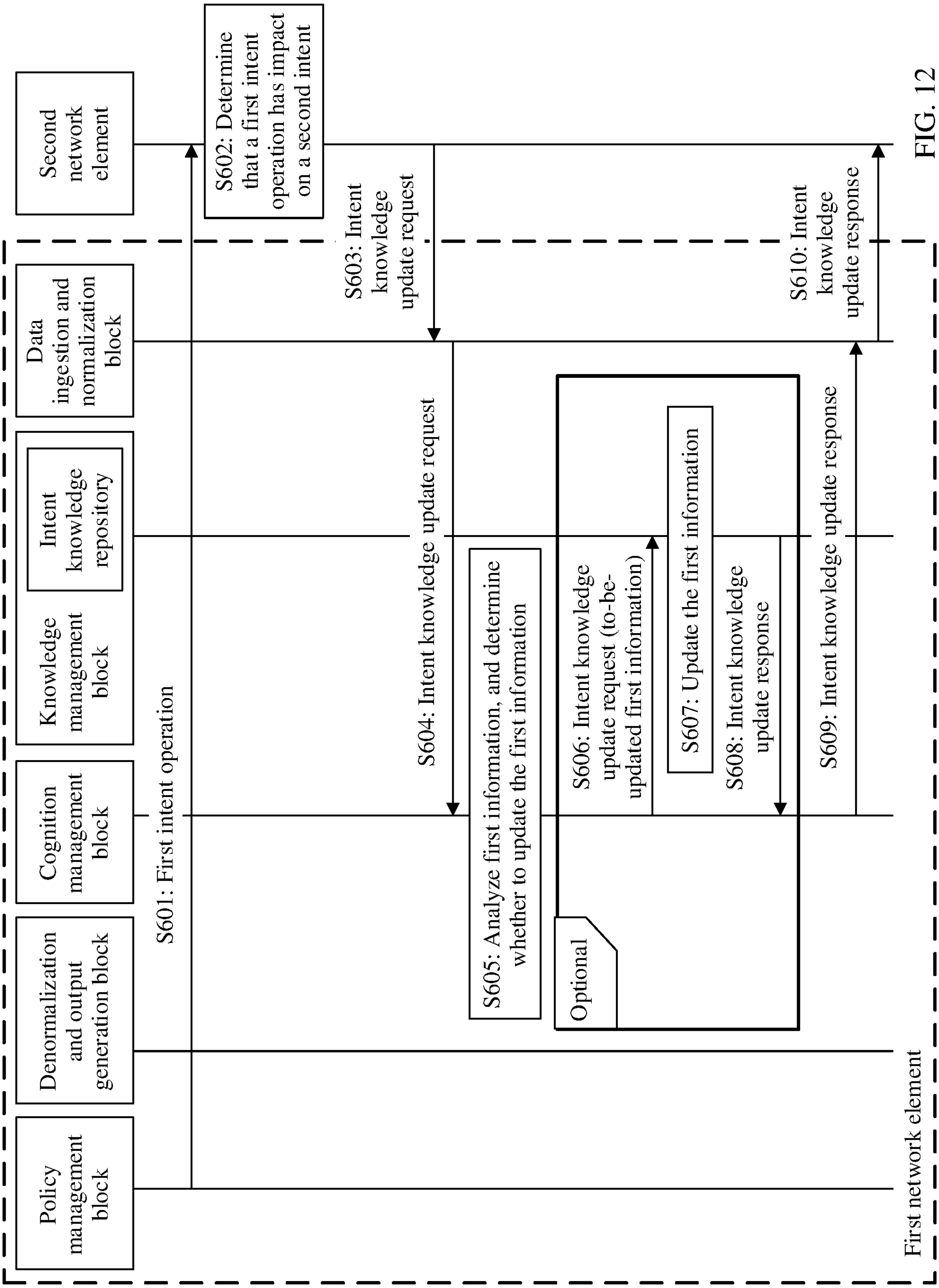
Policy management block
Denormalization and output generation block
Cognition management block
Knowledge management block
Intent knowledge repository
Data ingestion and normalization block
Second network element
S601: First intent operation
S602: Determine that a first intent operation has impact on a second intent
S603: Intent knowledge update request
S604: Intent knowledge update request
S605: Analyze first information, and determine whether to update the first information
Optional
S606: Intent knowledge update request (to-be-updated first information)
S607: Update the first information
S608: Intent knowledge update response
S609: Intent knowledge update response
S610: Intent knowledge update response
First network element

FIG. 12

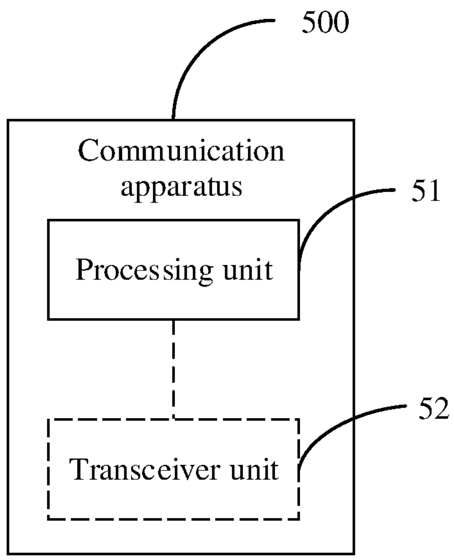
500
Communication apparatus
51
Processing unit
52
Transceiver unit

FIG. 13

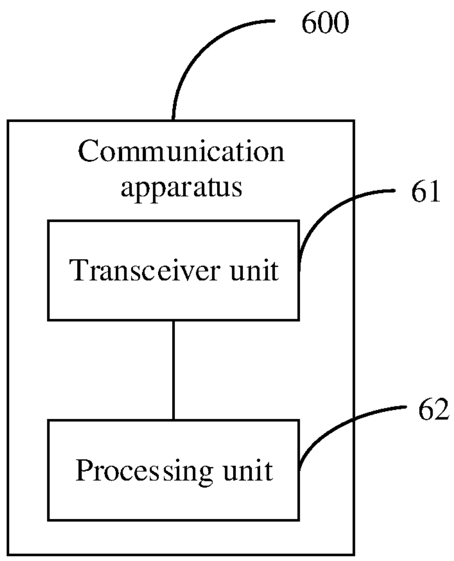
600
Communication apparatus
61
Transceiver unit
62
Processing unit

FIG. 14

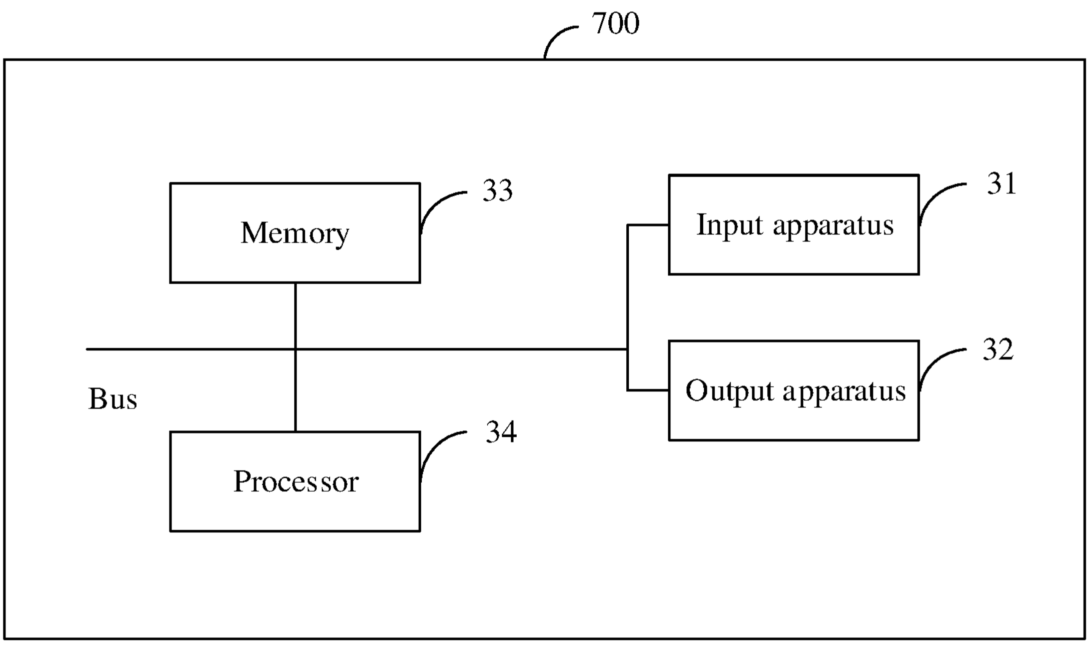
700
33
Memory
31
Input apparatus
32
Output apparatus
Bus
34
Processor

FIG. 15

**INTERNATIONAL SEARCH REPORT**

International application No.
**PCT/CN2021/100747**

**A. CLASSIFICATION OF SUBJECT MATTER**

H04W 8/02(2009.01)i； H04W 24/02(2009.01)i； H04W 28/02(2009.01)i

According to International Patent Classification (IPC) or to both national classification and IPC

**B. FIELDS SEARCHED**

Minimum documentation searched (classification system followed by classification symbols)

H04W; H04L; H04Q; G06F

Documentation searched other than minimum documentation to the extent that such documents are included in the fields searched

Electronic data base consulted during the international search (name of data base and, where practicable, search terms used)

CNPAT, CNKI, 3GPP, EPODOC, WPI: 知识, 意图, 通信, 可信, 可靠, 指示, 目标, 操作, 影响, 不同, 选择, 网元, knowledge, intent, communication, trust, reliability, indicat+, object+, operat+, influen+, differen+, select+, network element

**C. DOCUMENTS CONSIDERED TO BE RELEVANT**

| Category* | Citation of document, with indication, where appropriate, of the relevant passages | Relevant to claim No. |
|---|---|---|
| X | 3GPP. "3rd Generation Partnership Project; Technical Specification Group Services and System Aspects; Telecommunication management; Study on scenarios for Intent driven management services for mobile networks (Release 16)" *3GPP TR 28.812 V0.10.0,* 27 March 2020 (2020-03-27), sections 4.1.4, 5.3-6.3 | 1-25 |
| X | CN 111277442 A (GANJIANG NEW AREA WISDOM IOT RESEARCH INSTITUTE CO., LTD.) 12 June 2020 (2020-06-12) description, paragraphs [0006]-[0036] | 1-25 |
| A | CN 110278111 A (XIDIAN UNIVERSITY) 24 September 2019 (2019-09-24) entire document | 1-25 |
| A | CN 109245916 A (XIDIAN UNIVERSITY) 18 January 2019 (2019-01-18) entire document | 1-25 |
| A | US 2019179894 A1 (INTERNATIONAL BUSINESS MACHINES CORPORATION) 13 June 2019 (2019-06-13) entire document | 1-25 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 August 2021** | **16 September 2021** |
| Name and mailing address of the ISA/CN<br>**China National Intellectual Property Administration (ISA/CN)**<br>**No. 6, Xitucheng Road, Jimenqiao, Haidian District, Beijing 100088**<br>**China**<br>Facsimile No. **(86-10)62019451** | Authorized officer<br><br>Telephone No. |

Form PCT/ISA/210 (second sheet) (January 2015)

**INTERNATIONAL SEARCH REPORT**
**Information on patent family members**

International application No.
**PCT/CN2021/100747**

| Patent document cited in search report | | | Publication date (day/month/year) | Patent family member(s) | Publication date (day/month/year) |
|---|---|---|---|---|---|
| CN | 111277442 | A | 12 June 2020 | None | |
| CN | 110278111 | A | 24 September 2019 | None | |
| CN | 109245916 | A | 18 January 2019 | None | |
| US | 2019179894 | A1 | 13 June 2019 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202010569778X